# EUROPEAN PATENT SPECIFICATION

(11) **EP 2 941 955 B1**
(45) Date of publication and mention of the grant of the patent: **08.05.2019**
(21) Application number: 13868543.3
(22) Date of filing: 27.12.2013
(51) Int. Cl.: A01M 1/00, A01M 17/00, A01N 59/00, A01P 3/00, A01P 7/02, A01P 7/04, H05H 1/24

(54) **PATHOGENIC MICROBE AND INSECT PEST EXTERMINATION METHOD AND PATHOGENIC MICROBE AND INSECT PEST EXTERMINATION DEVICE**
VERFAHREN ZUR VERNICHTUNG PATHOGENER MIKROBEN UND SCHÄDLINGSINSEKTEN SOWIE VORRICHTUNG ZUR VERNICHTUNG PATHOGENER MIKROBEN UND SCHÄDLINGSINSEKTEN
PROCÉDÉ D'EXTERMINATION DE MICROBES PATHOGÈNES ET D'INSECTES NUISIBLES ET DISPOSITIF D'EXTERMINATION DE MICROBES PATHOGÈNES ET D'INSECTES NUISIBLES

(30) Priority: 30.12.2012 JP 2012289269
(43) Date of publication of application: 11.11.2015
(73) Proprietor: Tohoku University, Aoba-ku Sendai-shi Miyagi 980-8577 (JP)
(72) Inventor: Kaneko Toshiro, Sendai-shi Miyagi 980-8577 (JP); Kato Toshiaki, Sendai-shi Miyagi 980-8577 (JP)
(74) Representative: Plougmann Vingtoft a/s
(86) International application number: PCT/JP2013/085232
(87) International publication number: WO 2014/104350

(56) References cited:
- EP-A1- 2 174 671
- JP-A- 2001 145 689
- JP-A- 2001 145 689
- JP-A- 2006 202 541
- JP-A- 2008 135 242
- JP-A- 2008 135 242
- JP-A- 2008 237 047
- JP-A- 2008 237 047
- JP-A- 2010 225 361
- JP-A- 2012 252 843
- JP-A- 2012 531 699

## Description

### Technical Field

The present invention relates to a non-therapeutic method of eradicating pathogens and pests and a device for eradicating pathogens and pests to kill pathogens or pests.

### Background Art

Conventionally, the formation of a thin film and etching by the utilization of plasma discharge have been widely used. For example, a thin film of an inorganic metal compound is formed by atmospheric pressure glow discharge plasma (see Patent Literature 1). Patent Literature 2 discloses a device that, in a plasma analysis device for performing elemental analysis, sprays an item to be analyzed together with a liquid to introduce it into plasma.

On the other hand, as a method of utilizing plasma, a method of performing sterilization with air plasma has been developed (see, for example, Patent Literature 3).

In the field of agriculture, vegetables and the like are grown without the use of pesticides. However, in the conventional agriculture, it is impossible to effectively eradicate pathogens and pests on crops without the use of pesticides, and the residue of pesticides on crops and soil becomes problematic. In recent years, attention has been focused on a hydroxyl radical (hereinafter referred to as an "OH radical"), which is most effective for sterilization.

### Citation List

### Patent Literature

[Patent Literature 1] Japanese Unexamined Patent Application Publication No. hei7-138761
[Patent Literature 2] Japanese Unexamined Patent Application Publication No. 2006-202541
[Patent Literature 3] Japanese Unexamined Patent Application Publication No. 2010-187648

### Summary of Invention

### Technical Problem

In the method of performing sterilization with air plasma as disclosed in Patent Literature 3, it is impossible to effectively generate an OH radical, which has excellent sterilization effects, with the result that it is disadvantageously impossible to effectively eradicate pathogens and pests. Hence, for example, even when the OH radical is used in the field of agriculture, it is disadvantageously impossible to produce an effect that would warrant using it instead of pesticides.

In view of the foregoing problems, the present invention has a first object to provide a non-therapeutic method of eradicating pathogens and pests and a device for eradicating pathogens and pests that can efficiently generate an OH radical and that are excellent in the effect of eradicating pathogens and pests. A second object is to provide a method of eradicating pathogens and pests and a device for eradicating pathogens and pests that can sterilize crops, soil without use of pesticides or can kill pests when they are used in the field of agriculture.

### Solution to Problem

The present inventors have found that water such as water mist and the like is introduced into plasma such as air and so on, to generate an OH radical and that it is possible to perform sterilization and kill pests with the OH radical, and have conceived the present invention.

In order to achieve the above objects, a non-therapeutic method of eradicating pathogens and pests according to the present invention includes: introducing water mist or water droplets into a reaction container; supplying, from a gas supply portion, a plasma-forming gas to the reaction container; applying a voltage between a positive electrode and a negative electrode provided in the reaction container to discharge the gas and introducing the water mist or water droplets into generated plasma to generate an OH radical; and applying the OH radical to the pathogens or the pests to eradicate them.

In the non-therapeutic method of eradicating pathogens and pests according to the present invention, not only the gas but also the water is introduced into the reaction container, and thus it is possible to efficiently generate the OH radical. Since the OH radical has excellent sterilization effects, it is possible to effectively eradicate pathogens and pests by killing them.

In the method of eradicating pathogens and pests according to the present disclosure, any form of water may be introduced into the reaction container, and water mist or water droplets are preferable. In this case, it is possible to more easily generate the OH radical. As the gas, any plasma-forming gas may be used, and any of air, helium and argon or a mixture of these gasses is preferable. The amount of the OH radical generated may be controlled by controlling the amount of the water mist supplied and/or the amount of the gas supplied.

The non-therapeutic method of eradicating pathogens and pests according to the present invention is preferably used for an item to be sterilized that will or has been damaged in some way by a pathogenic agent or a pest which harms plants for example for a plant or soil that will or has been damaged. Here, examples of the pathogenic agent include pathogens such as filamentous fungi (mainly molds) and bacteria and viruses. The pathogens may be any one of rice blast, wheat powdery mildew, soybean purpura, strawberry gray mold disease, cucumber gray mold disease, tomato gray mold disease, lily leaf blight, cucumber powdery mildew, strawberry powdery mildew, tomato leaf mold disease, onion rust disease, chrysanthemum white rust disease, green onion black spot disease, apple spot deciduous disease, cucumber brown spot disease, crown daisy anthrax, parsley leaf blight, apple brown spot disease and bakanae disease. For the pest, the method can be applied to any pests that harm plants, and may be preferably applied to mites or aphids.

In the non-therapeutic method of eradicating pathogens and pests according to the present invention, more preferably, an OH radical that is generated by setting the voltage at 10 to 20 kV and introducing 0.001 to 10 mL of the water mist per hour may be used, the amount of the gas supplied may be set at 7 to 20 liters / minute and furthermore, the OH radical may be applied to the pathogens or the pests for at least 5 to 15 minutes.

A non-therapeutic eradicating method for agriculture according to the present invention is characterized that is comprising the method of eradicating pathogens and pests according to the present invention.

In the non-therapeutic eradicating method for agriculture according to the present invention, since it is possible to efficiently generate the OH radical having excellent sterilization effects, it is possible to sterilize crops, soil and the like or kill pests without the use of pesticides.

In order to achieve the above objects, a device for eradicating pathogens and pests according to the present invention includes: a reaction container to generate plasma; a pair of electrodes; a water supply portion; a gas supply portion; and a power supply portion, where one of the electrodes includes an insertion portion that is inserted into the reaction container, the other electrode is arranged in a position opposite the insertion portion, the water supply portion is provided such that the water supply portion can supply water through the insertion portion into the generated plasma, wherein the water is water mist or water droplets , the gas supply portion is provided such that the gas supply portion can supply a plasma-forming gas to the reaction container and the power supply portion is provided such that the power supply portion can apply a voltage between the insertion portion and the other electrode so as to generate an OH radical in the reaction container to which the water and the gas are supplied.

The device for eradicating pathogens and pests according to the present invention is preferably used according to any one of the non-therapeutic methods of eradicating pathogens and pests described above and according to the present invention. In the device for eradicating pathogens and pests according to the present invention, since not only the gas but also the water is introduced through the insertion portion into the reaction container, it is possible to efficiently generate the OH radical. Since the OH radical has excellent sterilization effects, it is possible to effectively eradicate pathogens and pests by killing the pathogens and the pests. Hence, when it is used in the field of agriculture, it is possible to sterilize crops, soil or kill pests without the use of pesticides. As a device used in the field of agriculture, a plasma device according to the present invention is formed with the device for eradicating pathogens and pests according to the present invention, and is used in the agricultural eradicating method according to the present invention.

Preferably, in the device for eradicating pathogens and pests according to the present invention, the insertion portion is formed in a tubular shape, and the insertion portion can supply the water to the reaction container through an interior thereof. In this case, it is possible to supply the water to a position sandwiched between the electrodes within the reaction container, and thus it is possible to effectively generate the OH radical.

When the insertion portion is formed in a tubular shape, the insertion portion may include a linear member that is provided to protrude from a tip end to transmit the water passing through the interior and that is formed with a thin wire. In this case, it is possible to efficiently generate the OH radical from the water transmitted by the linear member. The water transmitted by the linear member is preferably formed in the shape of droplets. A cooling means may be included which is provided such that a gap is provided between the tip end and an outside surface of the insertion portion, that the tip end and the outside surface of the insertion portion are covered and that the water passing through the insertion portion is passed through the gap and is thereafter supplied to the reaction container. In this case, with the cooling means, it is possible to cool the insertion portion and to prevent the temperature of the plasma including the generated OH radical from being increased. Hence, it is possible to reduce an effect caused by heat on an item to which the plasma is applied, such as a plant.

Preferably, in the device for eradicating pathogens and pests according to the present disclosure, the water supply portion can supply water mist or water droplets to the reaction container, and can supply the water mist in particular. In this case, in particular, it is possible to more easily generate the OH radical.

In the device for eradicating pathogens and pests according to the present invention, the other electrode may include a coil provided inside or outside the reaction container or may include a radial electrode portion formed with a plurality of thin wires. In this case, it is easy to generate plasma, and thus it is possible to efficiently generate the OH radical. The power supply portion is preferably a pulse power supply, and an alternating-current power supply can also be used.

### Advantageous Effects of Invention

In the present invention, it is possible to provide a non-therapeutic method of eradicating pathogens and pests and a device for eradicating pathogens and pests that can efficiently produce an OH radical generated by water such as water mist and a plasma-forming gas, that can perform sterilization or kill pests in a short period of time and that are excellent in the effect of eradicating pathogens and pests. In the present invention, it is possible to provide a non-therapeutic method of eradicating pathogens and pests and a device for eradicating pathogens and pests in which, for example, when they are used in the field of agriculture, it is possible to sterilize crops, soil or kill pests without the use of pesticides.

In the plasma device of the present invention, in the range of 0.5 atmospheres to atmospheric pressure, water mist is supplied into a plasma using air, helium or argon, and thus it is possible to efficiently generate an OH radical having a strong oxidizing power.

### Brief Description of Drawings

[Fig. 1] A diagram showing an example of the configuration of a device for eradicating pathogens and pests according to a first embodiment of the present invention;
[Fig. 2] A diagram showing an example of the relationship between the amount of hydroxyl radical generated from a device for eradicating pathogens and pests shown in Fig. 1 and the amount of water introduced;
[Fig. 3] A diagram showing an example of the configuration of a device for eradicating pathogens and pests according to a second embodiment of the present invention;
[Fig. 4] A diagram showing an example of the configuration of a device for eradicating pathogens and pests according to a variation of the second embodiment of the present invention;
[Fig. 5] An enlarged diagram in the vicinity of an electrode showing an example of the configuration of a device for eradicating pathogens and pests according to a third embodiment of the present invention;
[Fig. 6] An enlarged diagram in the vicinity of an electrode showing an example of the configuration of a device for eradicating pathogens and pests according to a fourth embodiment of the present invention;
[Fig. 7] Fig. 7(a) is a graph showing temperature changes at the time of generation of plasma when water is not introduced into a cooling means in the device for eradicating pathogens and pests shown in Fig. 6; and Fig. 7(b) is a graph showing temperature changes at the time of generation of plasma when water is introduced into the cooling means in the device for eradicating pathogens and pests shown in Fig. 6;
[Fig. 8] A diagram showing an example of the configuration of a device for eradicating pathogens and pests according to a fifth embodiment of the present invention;
[Fig. 9] A diagram showing an emission spectroscopic spectrum of plasma by helium gas and water mist in the device for eradicating pathogens and pests shown in Fig. 1;
[Fig. 10] A diagram showing the dependence of an OH radical on the amount of water introduced and the dependence of an emission intensity ratio on helium and argon in the device for eradicating pathogens and pests shown in Fig. 1; Fig. 10(a) shows the case of helium plasma and Fig. 10(b) shows the case of argon plasma;
[Fig. 11] A diagram showing the dependence of the OH radical on an application voltage and the dependence of the emission intensity ratio on helium and argon in the device for eradicating pathogens and pests shown in Fig. 1; Fig. 11(a) shows the case of helium plasma and Fig. 11(b) shows the case of argon plasma;
[Fig. 12] A diagram showing emission spectroscopic spectra of plasma by air depending on the presence of water mist in the device for eradicating pathogens and pests shown in Fig. 3; Fig. 12(a) shows a case where the water mist is not added and Fig. 12(b) shows a case where the water mist is added;
[Fig. 13] An enlarged diagram of the emission spectroscopic spectra of Fig. 12 in a wavelength range of 300 to 350 nm;
[Fig. 14] A diagram showing the dependence of the OH radical on the amount of water introduced and the dependence of the emission intensity ratio on N₂ in the device for eradicating pathogens and pests shown in Fig. 3;
[Fig. 15] A diagram showing the dependence of the OH radical on the amount of water introduced and the dependence of the emission intensity ratio on helium in the device for eradicating pathogens and pests shown in Fig. 3;
[Fig. 16] A diagram showing the dependence of the application voltage on the emission intensity of the OH radical and N₂ in the device for eradicating pathogens and pests shown in Fig. 3;
[Fig. 17] A diagram showing the dependence of the application voltage on the emission intensity of the OH radical and helium in the device for eradicating pathogens and pests shown in Fig. 3;
[Fig. 18] A diagram schematically showing a method of measuring the density of the OH radical by the utilization of the hydroxylation of terephthalic acid by the OH radical;
[Fig. 19] A diagram showing spectra of fluorescence generated by the hydroxylation of terephthalic acid when the amount of helium gas passed is changed in the device for eradicating pathogens and pests shown in Fig. 3; Fig. 19(a) shows the case of 1 slm, Fig. 19(b) shows the case of 3 slm, Fig. 19(c) shows the case of 5 slm and Fig. 19(d) shows the case of 8 slm;
[Fig. 20] A diagram showing the dependence of the fluorescent intensity on the amount of helium gas passed in the device for eradicating pathogens and pests shown in Fig. 3;
[Fig. 21] Fig. 21(a) shows a diagram showing the dependence of the concentration of hydrogen peroxide in plasma on the amount of water introduced and Fig. 21(b) shows a diagram showing the dependence of the concentration of hydrogen peroxide in plasma on the amount of air introduced, in the device for eradicating pathogens and pests shown in Fig. 1;
[Fig. 22] Fig. 22(a) is a diagram showing the dependence of the density of the OH radical in plasma on the time during which plasma is applied and Fig. 22(b) is a diagram showing the dependence of the concentration of hydrogen peroxide in plasma on the time, during which plasma is applied in the device for eradicating pathogens and pests shown in Fig. 1;
[Fig. 23] Fig. 23(a) is a diagram showing the dependence of the density of the OH radical in plasma on the distance over which plasma is applied and Fig. 23(b) is a diagram showing the dependence of the concentration of hydrogen peroxide in plasma on the distance, over which plasma is applied in the device for eradicating pathogens and pests shown in Fig. 1;
[Fig. 24] A diagram showing microscope images of lily leaf blight fungi two days after the application of the OH radical generated by helium plasma in the device for eradicating pathogens and pests shown in Fig. 1; Fig. 24(a) shows the fungi when the OH radical was not applied, Fig. 24(b) shows the fungi when a power supply portion was turned off and He and the water mist were applied for 10 minutes, Fig. 24(c) shows the fungi when the OH radical was applied for 5 minutes, and Fig. 24(d) shows the fungi when the OH radical was applied for 10 minutes;
[Fig. 25] A diagram showing microscope images of lily leaf blight fungi two days after the application of the OH radical generated by air plasma in the device for eradicating pathogens and pests shown in Fig. 4; Fig. 25(a) shows the fungi when the OH radical was not applied, Fig. 25(b) shows the fungi when the power supply portion was turned off and the air and the water mist were applied for 10 minutes, Fig. 25(c) shows the fungi when the OH radical was applied for 5 minutes, and Fig. 25(d) shows the fungi when the OH radical was applied for 10 minutes;

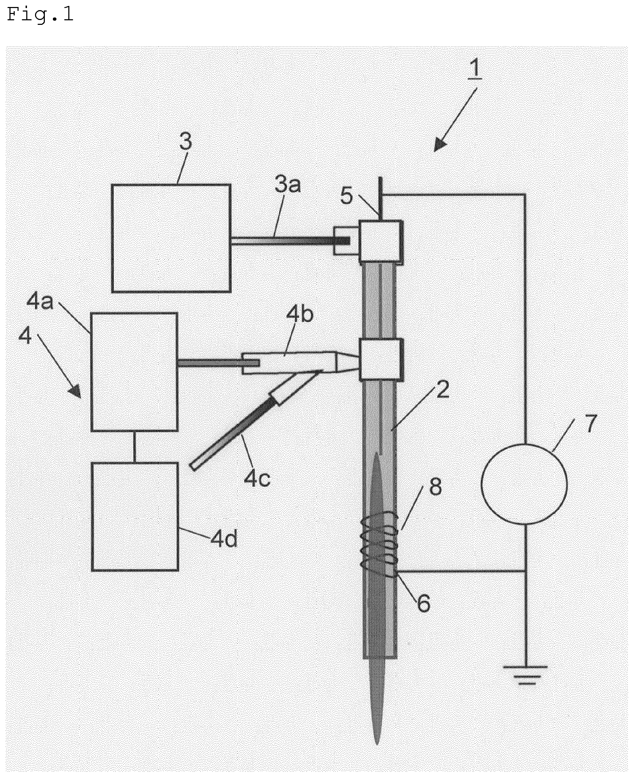

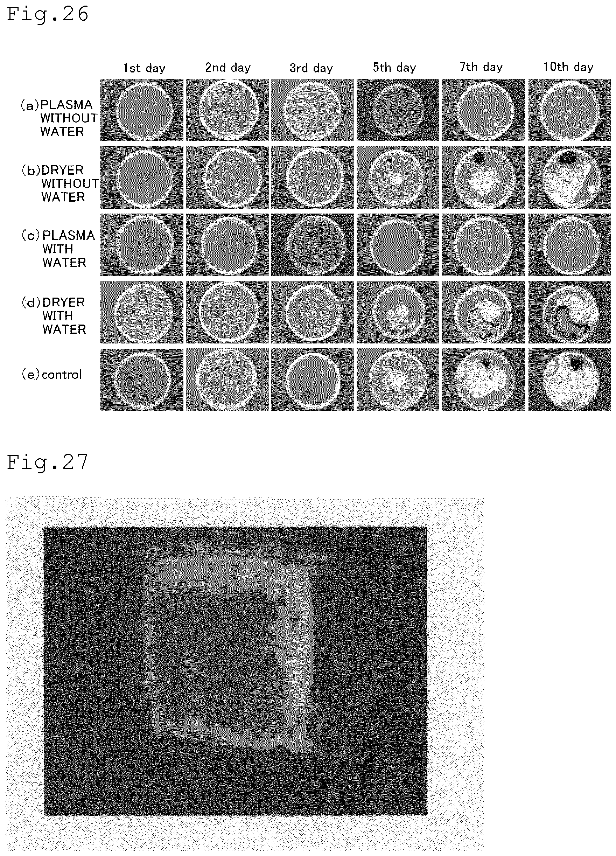

[Fig. 26] Fig. 26 shows microscope photographs showing the results of observation on lily leaf blight fungi each time the number of days had elapsed in the device for eradicating pathogens and pests shown in Fig. 1; Fig. 26(a) shows results when the plasma was applied without the introduction of the water mist, Fig. 26(b) shows results when the wind of a dryer was applied without the introduction of the water mist, Fig. 26(c) shows results when the water mist was introduced and the plasma was applied, Fig. 26(d) shows results when the water mist was introduced and the wind of the dryer was applied, and Fig. 26(e) shows results when the application of the plasma, the dryer and the introduction of the water were not performed;
[Fig. 27] A diagram showing microscope images of chrysanthemum white rust leaf fungi of the fourth day after the application of the OH radical in the device for eradicating pathogens and pests shown in Fig. 1;

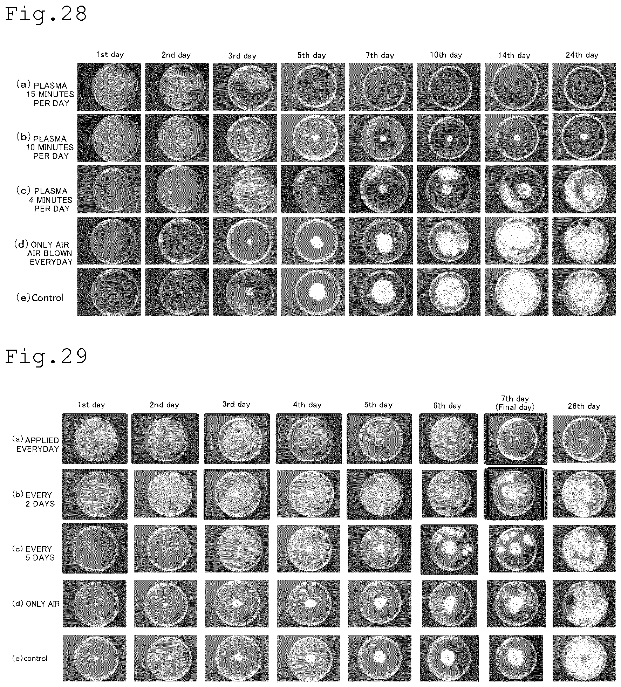

[Fig. 28] Fig. 28 shows microscope photographs showing the results of observation on bakanae disease fungi each time the number of days had elapsed in the device 1 for eradicating pathogens and pests shown in Fig. 1; Fig. 28(a) shows results when the time during which the plasma was applied was set at 15 minutes per day, Fig. 28(b) shows results when the time during which the plasma was applied was set at 10 minutes per day, Fig. 28(c) shows results when the time during which the plasma was applied was set at 4 minutes per day, Fig. 28(d) shows results when the plasma was not applied and only air was blown for 4 minutes per day, and Fig. 28(e) shows results when the plasma was not applied;
[Fig. 29] Fig. 29 shows microscope photographs (the dates when the plasma was applied are indicated by thick frames) showing the results of observation on bakanae disease fungi each time the number of days had elapsed in the device 1 for eradicating pathogens and pests shown in Fig. 1; Fig. 29(a) shows results when the plasma was applied every day, Fig. 29(b) shows results when the plasma was applied every two days, Fig. 29(c) shows results when the plasma was applied every five days, Fig. 29(d) shows results when the plasma was not applied and only air was blown every day, and Fig. 29(e) shows results when the plasma was not applied;

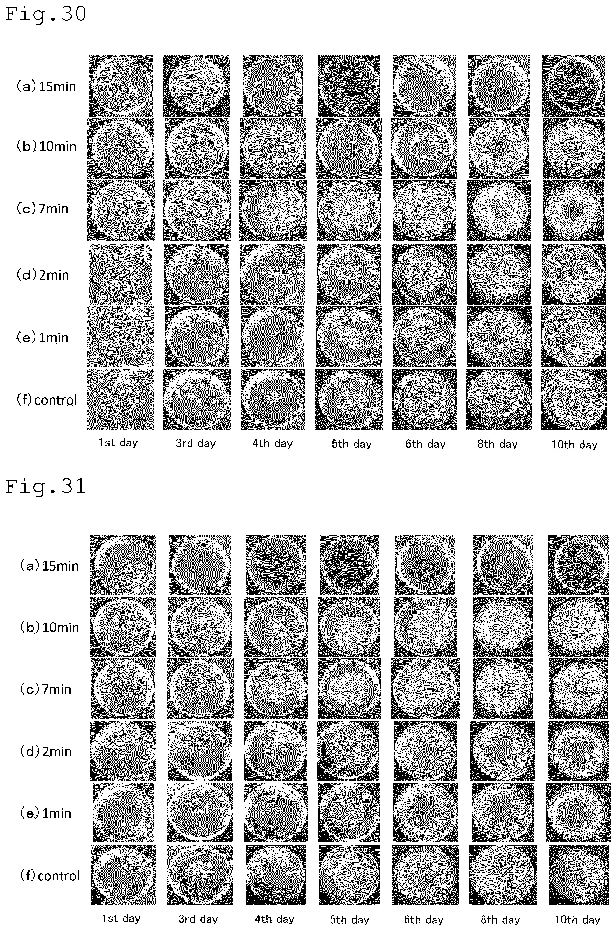

[Fig. 30] Fig. 30 shows microscope photographs showing the results of observation on botrytis cinerea fungi each time the number of days had elapsed without the introduction of the water mist in the device 1 for eradicating pathogens and pests shown in Fig. 1; Fig. 30(a) shows results when the time during which the plasma was applied was set at 15 minutes, Fig. 30(b) shows results when the time during which the plasma was applied was set at 10 minutes, Fig. 30(c) shows results when the time during which the plasma was applied was set at 7 minutes, Fig. 30(d) shows results when the time during which the plasma was applied was set at 2 minutes, Fig. 30(e) shows results when the time during which the plasma was applied was set at 1 minute, and Fig. 30(f) shows results when the plasma was not applied;
[Fig. 31] Fig. 31 shows microscope photographs showing the results of observation on botrytis cinerea fungi each time the number of days had elapsed with the introduction of the water mist in the device 1 for eradicating pathogens and pests shown in Fig. 1; Fig. 31(a) shows results when the time during which the plasma was applied was set at 15 minutes, Fig. 31(b) shows results when the time during which the plasma was applied was set at 10 minutes, Fig. 31(c) shows results when the time during which the plasma was applied was set at 7 minutes, Fig. 31(d) shows results when the time during which the plasma was applied was set at 2 minutes, Fig. 31(e) shows results when the time during which the plasma was applied was set at 1 minute, and Fig. 31(f) shows results when the plasma was not applied;

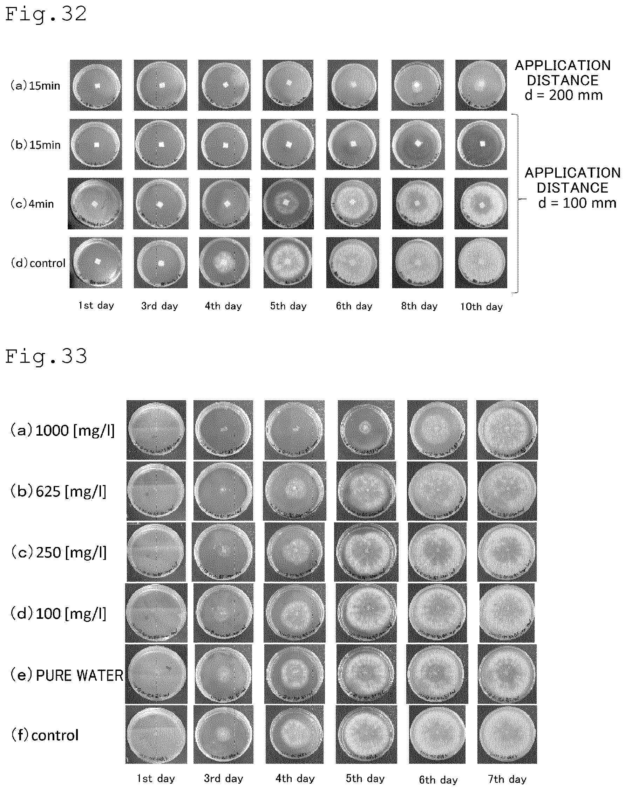

[Fig. 32] Fig. 32 shows microscope photographs showing the results of observation on the spores of botrytis cinerea fungi each time the number of days had elapsed in the device 1 for eradicating pathogens and pests shown in Fig. 1; Fig. 32(a) shows results when the time during which the plasma was applied was set at 15 minutes and the distance over which the plasma was applied was set at 200 mm, Fig. 32(b) shows results when the time during which the plasma was applied was set at 15 minutes and the distance over which the plasma was applied was set at 100 mm, Fig. 32(c) shows results when the time during which the plasma was applied was set at 4 minutes and the distance over which the plasma was applied was set at 100 mm, and Fig. 32(d) shows results when the plasma was not applied;
[Fig. 33] Fig. 33 shows microscope photographs showing the results of observation on the botrytis cinerea fungi each time the number of days had elapsed; Fig. 33(a) shows results when hydrogen peroxide having a concentration of 1000 mg / L was dropped, Fig. 33(b) shows results when hydrogen peroxide having a concentration of 625 mg / L was dropped, Fig. 33(c) shows results when hydrogen peroxide having a concentration of 250 mg / L was dropped, Fig. 33(d) shows results when hydrogen peroxide having a concentration of 100 mg / L was dropped, Fig. 33(e) shows results when instead of hydrogen peroxide, pure water was dropped, and Fig. 33(f) shows results when nothing was dropped; and
[Fig. 34] A diagram showing microscope images of aphids when the OH radical was applied to the aphids in the device for eradicating pathogens and pests shown in Fig. 1.

### Description of Embodiments

Embodiments of the present invention will be described in detail below with reference to drawings.

### (First embodiment)

Fig. 1 is a diagram showing an example of the configuration of a device 1 for eradicating pathogens and pests according to the first embodiment of the present invention. As shown in Fig. 1, the device 1 for eradicating pathogens and pests according to the first embodiment of the present invention includes a reaction container 2, a gas supply portion 3 that supplies gas to the reaction container 2, a water supply portion 4 that supplies water mist to the reaction container 2, a negative electrode 5 and a positive electrode 6 that are arranged outside the reaction container, and a power supply portion 7.

The reaction container 2 is a container that is formed of glass such as quartz glass and the like or an insulator such as resin and the like. A gas carrier tube 3a is connected to the reaction container 2. Furthermore, in the reaction container 2, the negative electrode 5 and the positive electrode 6 are arranged. The negative electrode 5 is arranged in the vicinity of the gas carrier tube 3a. The positive electrode 6 includes an outer coil 8 that is wound around the reaction container 2. The outer coil 8 is formed with a copper wire or a coated copper wire. The outer coil 8 is inserted, and thus air plasma is easily produced.

The gas supply portion 3 is formed with a pressure adjustment unit that is connected to a gas cylinder; a stopper valve; a mass flow controller and the like, and is connected to an inlet of the gas carrier tube 3a with piping made of resin or metal. As a gas, any of air, helium and argon or a mixture of the gasses thereof is supplied to the gas carrier tube 3a from the gas supply portion 3. As air, normal atmosphere or compressed air from a compressor may be used. The gas carrier tube 3a is formed with a tube made of resin or glass.

When air is used as the gas, for example, the gas supply portion 3 may be formed with an air-blowing fan and a dumper which is fitted to the air suction port of the air-blowing fan and that can adjust the amount of air by opening and closing. Furthermore, when an air-blowing fan for controlling the number of revolutions with an inverter is adopted, the dumper can be omitted. By provision of the gas supply portion 3 as described above, it becomes unnecessary to use not only expensive helium or argon, but also a gas cylinder, and it is possible to reduce the running cost, the weight and the size of the device 1 for eradicating pathogens and pests. In this way, when the device 1 for eradicating pathogens and pests according to the present invention is used to sterilize crops such as strawberries and the like, it is easy to sterilize the crops while moving the device 1 for eradicating pathogens and pests above the crops.

The water supply portion 4 includes a pump 4a that supplies water, a water mist generation unit 4b, a water mist carrier gas supply unit 4c that is connected to the water mist generation unit 4b and a water amount control device 4d that controls the amount of water carried by the pump 4a. The water mist generation unit 4b is a device for spraying water, and is also called a nebulizer. The water mist generated by the water supply portion 4 is supplied into the reaction container 2 from the lower left side of the negative electrode 5 arranged in the reaction container 2.

The water supply portion 4 generates the water mist with an extremely small amount of water supplied from the pump 4a and the gas supplied from the water mist carrier gas supply unit 4c. Here, the amount of water supplied from the pump 4a is controlled by the water amount control device 4d.

As the material of the negative electrode 5, cupper (Cu) or stainless steel can be used. An electrode using a W wire may also be used. As the material of the positive electrode 6, a plate or wire formed of tungsten (W) can be used. The positive electrode 6 may be grounded as an earth or ground potential. The potential is 0 V. In the following description, a voltage applied to the negative electrode 5 is represented by V.

The power supply portion 7 is a power supply that is connected to the negative electrode 5 and the positive electrode 6. For example, the power supply portion 7 is formed with an alternating-current high-voltage power supply that can control voltage and a half-wave rectification power supply that includes a capacitor, a diode and a resistor and the like. As the power supply portion 7, an alternating-current power supply such as a high-voltage power supply for low-frequency and the like or a pulse power supply may be used.

In the inner wall of the reaction container 2, a groove that generates a swirling flow in a gas flow including an OH radical may be formed, or a structure in which the diameter of the container is decreased toward a tip end from which the gas flow is discharged may be adopted.

In the device 1 for eradicating pathogens and pests according to the present invention, the gas and the water mist are supplied to the reaction container 2, and the OH radical is generated in the reaction container 2. The amount of OH radical generated can be controlled by the water amount control device 4d.

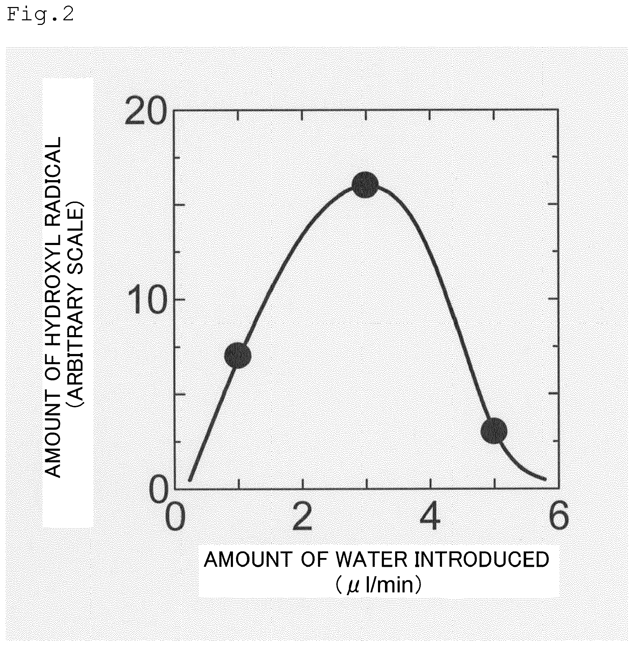

Fig. 2 is a diagram showing an example of the relationship between the amount of hydroxyl radical generated from the device 1 for eradicating pathogens and pests and the amount of water introduced. The vertical axis represents the OH radical generated (arbitrary scale), and the horizontal axis represents the amount of water introduced (µl / minute). 1 µl is 10⁻⁶ liters. As shown in Fig. 2, it is found that the amount of hydroxyl radical generated from the device 1 for eradicating pathogens and pests changes in the shape of a mountain such that it is increased with the amount of water introduced and is reduced after it reaches its peak.

### (Second embodiment)

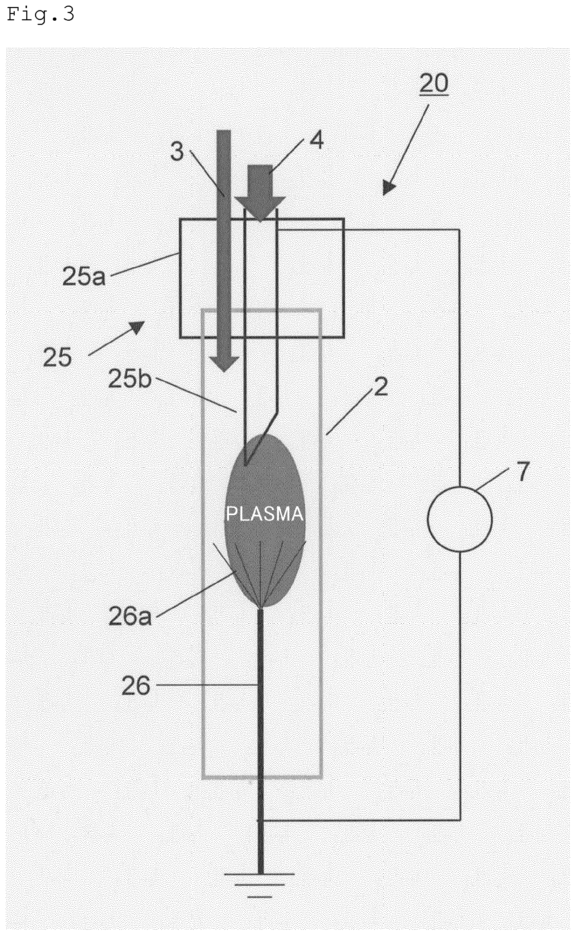

Fig. 3 is a diagram showing an example of the configuration of a device 20 for eradicating pathogens and pests according to a second embodiment of the present invention.

The device 20 for eradicating pathogens and pests shown in Fig. 3 differs from the device 1 for eradicating pathogens and pests shown in Fig. 1 in the configuration of a negative electrode 25 and a positive electrode 26 and the introduction of the water mist from the side of the negative electrode 25 into the reaction container 2.

The negative electrode 25 includes a main body portion 25a that is connected to the reaction container 2 and an insertion portion 25b that is connected to the main body portion 25a and that is inserted into the reaction container 2. The insertion portion 25b is formed with a thin tube whose tip end is tapered. The water supply portion 4 introduces the water mist through the insertion portion 25b into the reaction container 2. The positive electrode 26 is formed with bundled thin wires made of W (tungsten) or the like, and includes a radial electrode portion 26a in which the bundled thin wires are unbundled on the side opposite the insertion portion 25b of the negative electrode 25 and which is formed with a plurality of thin wires.

In the device 20 for eradicating pathogens and pests shown in Fig. 3, between the insertion portion 25b of the negative electrode 25 and the radial electrode portion 26a of the positive electrode 26, a part that has a high electric field strength as compared with the case of a so-called flat plate electrode plate is produced, and a large number of electric lines of force can be produced. In this way, when air is used as the gas, discharge can be easily performed at a pressure on the order of atmospheric pressure. The pressure of the air ranges from, for example, 0.1 atmospheres to about atmospheric pressure.

### (Variation of the second embodiment)

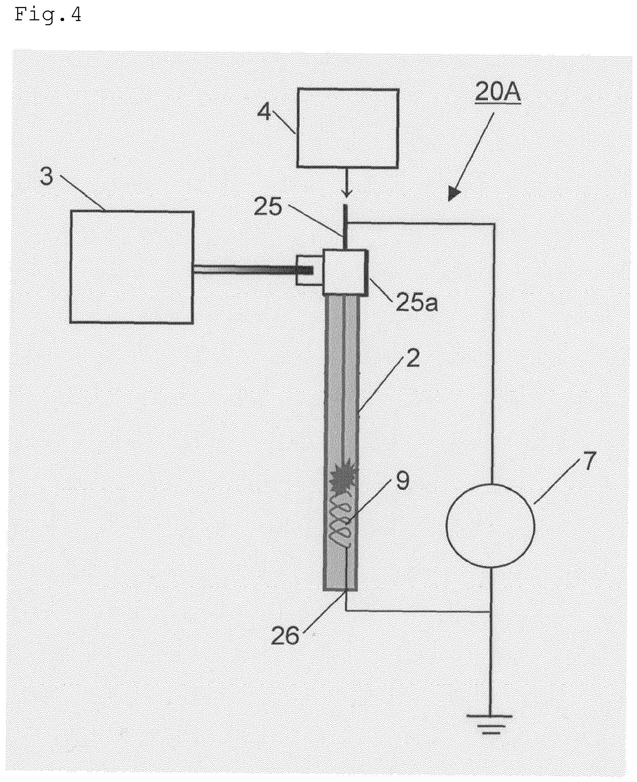

Fig. 4 is a diagram showing an example of the configuration of a device 20A for eradicating pathogens and pests according to a variation of the second embodiment of the present invention. The device 20A for eradicating pathogens and pests shown in Fig. 4 differs from the device 20 for eradicating pathogens and pests shown in Fig. 3 in that an inside coil 9 connected to the positive electrode 26 is included. The other configurations are the same as the device 20 for eradicating pathogens and pests shown in Fig. 3, and thus their description will be omitted.

The inside coil 9 connected to the positive electrode 26 is formed with a coated copper wire. When the inside coil 9 is inserted, it becomes easy to produce air plasma.

### (Third embodiment)

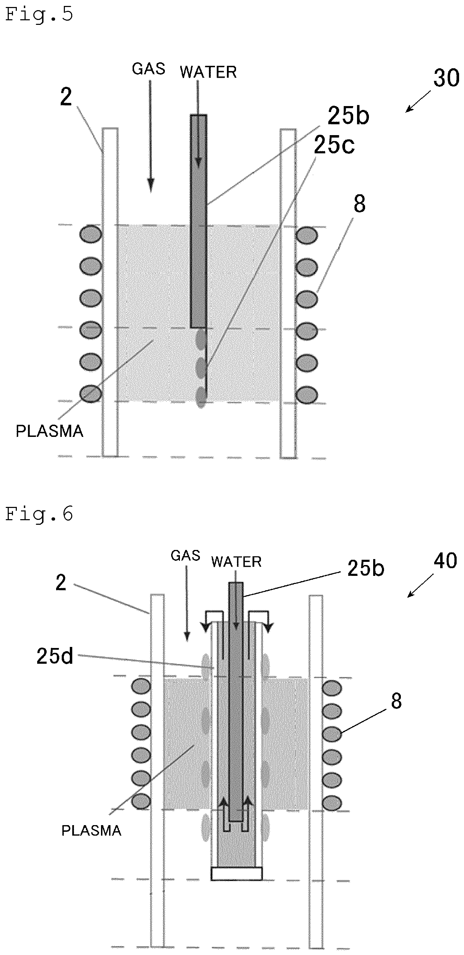

Fig. 5 is a diagram showing an example of the configuration of a device 30 for eradicating pathogens and pests according to a third embodiment of the present invention.

The device 30 for eradicating pathogens and pests shown in Fig. 5 differs from the device 1 for eradicating pathogens and pests shown in Fig. 1 in the configuration of the negative electrode 25 and the introduction of the water from the side of the negative electrode 25 into the reaction container 2.

The negative electrode 25 includes a tubular insertion portion 25b that is inserted into the reaction container 2 and a linear member 25c that is provided at a tip end of the insertion portion 25b and that is formed with a thin wire. In the negative electrode 25, the tip end portion of the insertion portion 25b and the linear member 25c are arranged inside the outer coil 8 of the positive electrode 26 wound around the reaction container 2. The device 30 for eradicating pathogens and pests introduces, through the interior of the insertion portion 25b, the water from the water supply portion 4 into the reaction container 2. The water that is passed through the interior of the insertion portion 25b is formed into water droplets, and is moved along the linear member 25c.

In the device 30 for eradicating pathogens and pests, voltage is applied by the power supply portion 7 between the insertion portion 25b of the negative electrode 25 and the linear member 25c and the outer coil 8 of the positive electrode 26, and thus plasma is produced, with the result that it is possible to efficiently generate the OH radical from the water moved along the linear member 25c.

### (Fourth embodiment)

Fig. 6 is a diagram showing an example of the configuration of a device 40 for eradicating pathogens and pests according to a fourth embodiment of the present invention.

The device 40 for eradicating pathogens and pests shown in Fig. 6 differs from the device 1 for eradicating pathogens and pests shown in Fig. 1 in the configuration of the negative electrode 25 and the introduction of the water from the side of the negative electrode 25 into the reaction container 2.

The negative electrode 25 includes a tubular insertion portion 25b that is inserted into the reaction container 2 and a cylindrical cooling means 25d that covers the insertion portion 25b. The cooling means 25d is formed of quartz glass, and an opening on the side of the tip end of the insertion portion 25b is blocked. The cooling means 25d is arranged so as to cover the tip end and the outside surface of the insertion portion 25b with a gap left between the tip end and the outside surface of the insertion portion 25b. In the negative electrode 25, the tip end portion of the insertion portion 25b is arranged inside the outer coil 8 of the positive electrode 26 wound around the reaction container 2.

The device 40 for eradicating pathogens and pests introduces, through the interior of the insertion portion 25b, the water from the water supply portion 4 into the reaction container 2. The water that is passed through the interior of the insertion portion 25b is passed through the gap between the insertion portion 25b and the cooling means 25d from the tip end of the insertion portion 25b and is supplied from the opening on the side of the back end of the cooling means 25d to the outside of the cooling means 25d, that is, between the inner wall of the reaction container 2 and the cooling means 25d.

In the device 40 for eradicating pathogens and pests, voltage is applied by the power supply portion 7 between the insertion portion 25b of the negative electrode 25 and the outer coil 8 of the positive electrode 26, and thus plasma is produced, with the result that it is possible to efficiently generate the OH radical from the water supplied to the outside of the cooling means 25d. By the cooling means 25d, the insertion portion 25b can be cooled, and thus it is possible to prevent the temperature of the plasma including the generated OH radical from being increased. Hence, it is possible to reduce an effect caused by heat on an item to which the plasma is applied, such as a plant and so on.

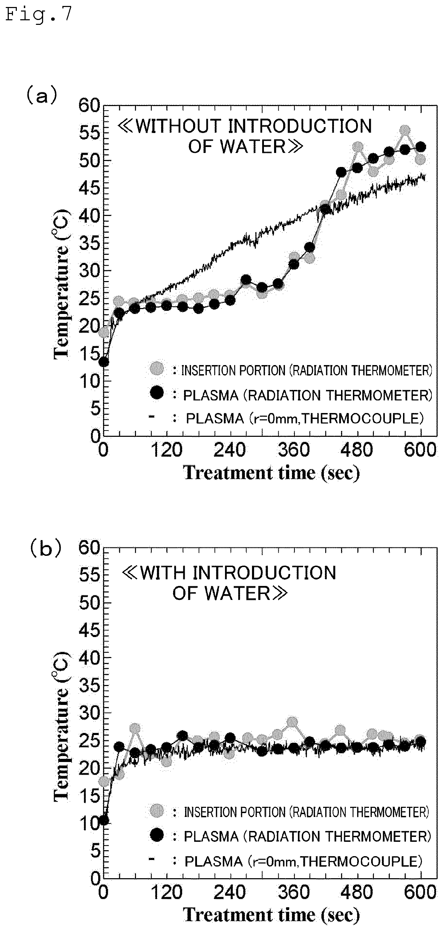

Fig. 7 is graphs showing changes in the temperatures of the insertion portion 25b and plasma at the time of generation of plasma when water is not introduced into the cooling means 25d in the device 40 for eradicating pathogens and pests and when water is introduced into the cooling means 25d in the device 40 for eradicating pathogens and pests. The temperature of the insertion portion 25b is measured with a radiation thermometer, and the temperature of the generated plasma is measured with a radiation thermometer and a thermocouple (the center position of the exit of the reaction container; r = 0 mm). It is confirmed that, as shown in Fig. 7, water is introduced into the cooling means 25d and thus the temperatures of the insertion portion 25b and the generated plasma are prevented from being increased.

### (Fifth embodiment)

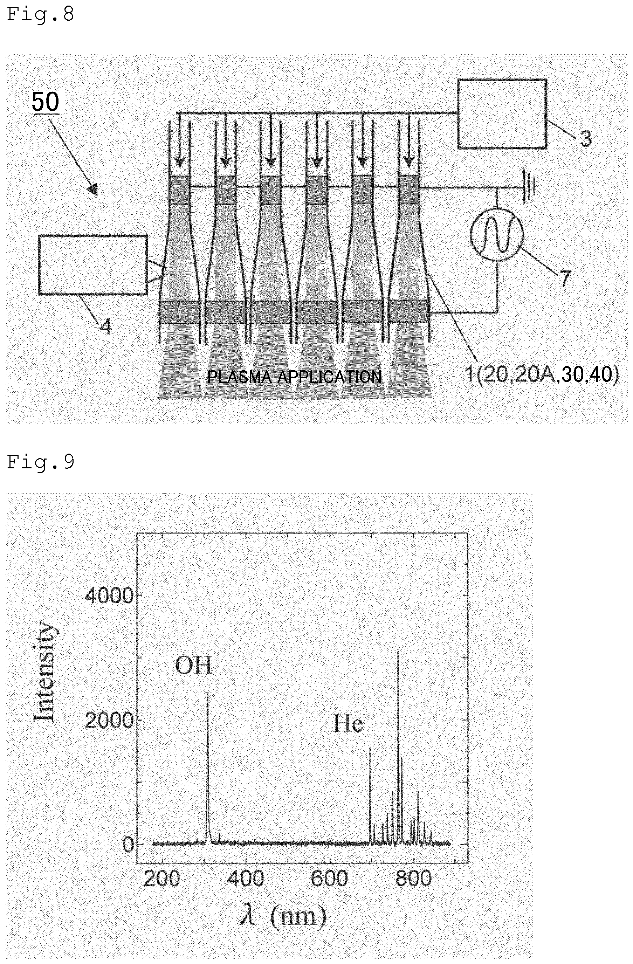

Fig. 8 is a diagram showing an example of the configuration of a device 50 for eradicating pathogens and pests according to a fifth embodiment of the present invention. The device 50 for eradicating pathogens and pests shown in Fig. 8 is formed with a plurality of devices, that is, the device 1 for eradicating pathogens and pests shown in Fig. 1, the device 20 for eradicating pathogens and pests shown in Fig. 3, the device 20A for eradicating pathogens and pests shown in Fig. 4, the device 30 for eradicating pathogens and pests shown in Fig. 5 and the device 40 for eradicating pathogens and pests shown in Fig. 6. With the device 50 for eradicating pathogens and pests shown in Fig. 8, it is possible to generate a large amount of OH radical. The device 50 for eradicating pathogens and pests shown in Fig. 8 is placed on a vehicle such as a tractor and the like, for example, and is moved along the direction of the ridges of a farmland where crops are grown so as to be able to be swept, with the result that its operability is enhanced. Although in the device 50 for eradicating pathogens and pests shown in Fig. 8 the devices 1, 20, 20A, 30 or 40 for eradicating pathogens and pests are arranged in a row, they may be arranged in a plane instead of being arranged in the same row, and when they are arranged in a plane, it is possible to apply the OH radical to a larger area.

When the devices 1, 20, 20A, 30, 40 and 50 for eradicating pathogens and pests were used, no ozone odor was produced.

### (Sterilization method)

A non-therapeutic method of eradicating pathogens and pests according to the embodiment of the present invention will be described. The non-therapeutic method of eradicating pathogens and pests using the device for eradicating pathogens and pests according to the embodiment of the present invention will be described below.

Using the OH radical generated with the device for eradicating pathogens and pests according to the present invention, the OH radical is applied to an item to be sterilized and thus it is possible to perform sterilization or kill pests.

A description will be given below, as an example, of a case of use in the field of agriculture as an eradicating method for agriculture. The OH radical generated with the device for eradicating pathogens and pests according to the present invention is applied to a crop that is an item to be sterilized and thus it is possible to perform sterilization or kill pests. The diseases that affect crops are thought to be caused by pathogenic agents (such as filamentous fungi, bacteria and viruses and the like.) and pests, and in the present specification, in particular, pathogenic agents are referred to as "bacteria" in a broad sense.

Examples of the diseases that can be killed by the OH radical include rice blast, wheat powdery mildew, soybean purpura, strawberry gray mold disease, cucumber gray mold disease, tomato gray mold disease, lily leaf blight, cucumber powdery mildew, strawberry powdery mildew, tomato leaf mold disease, onion rust disease, chrysanthemum white rust disease, green onion black spot disease, apple spot deciduous disease, cucumber brown spot disease, crown daisy anthrax, parsley leaf blight, apple brown spot disease and bakanae disease. Furthermore, in the present invention, with the OH radical generated with the water such as water mist and the like and the plasma-forming gas, it is possible to eradicate pests, that is, mites and aphids. The present invention can be applied to any pest that damages plants as a pest to be killed.

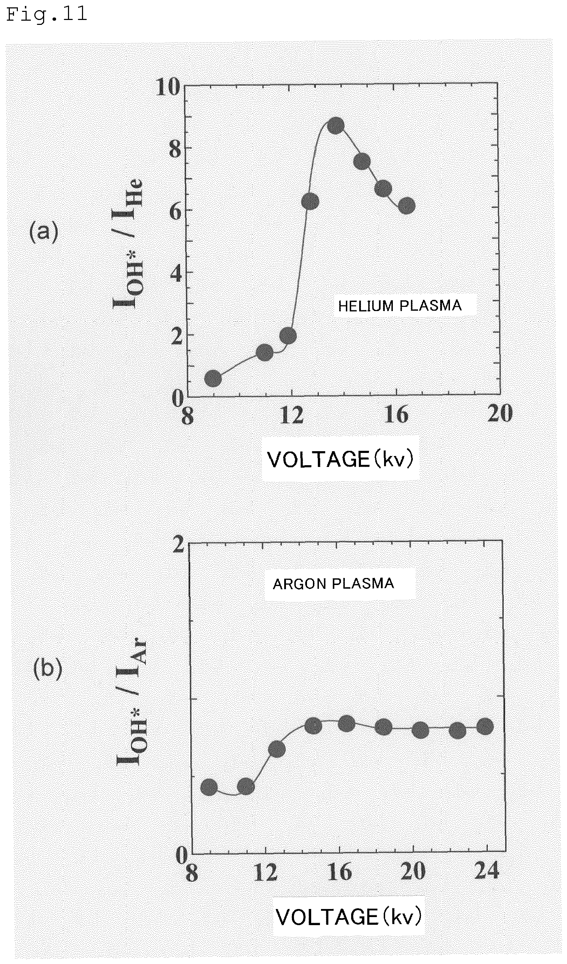

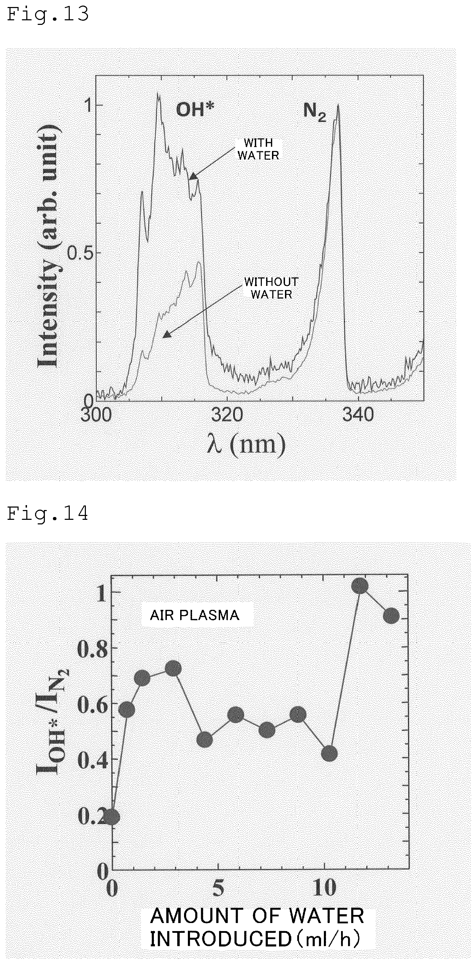

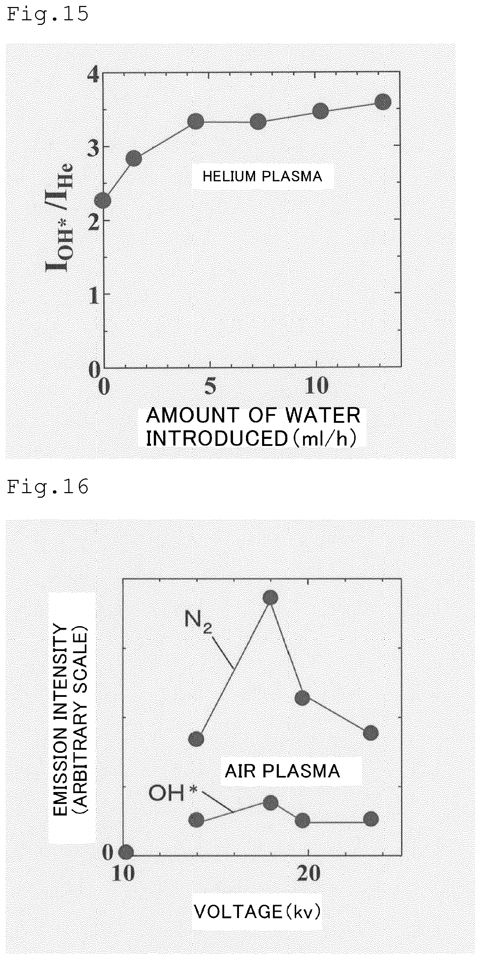

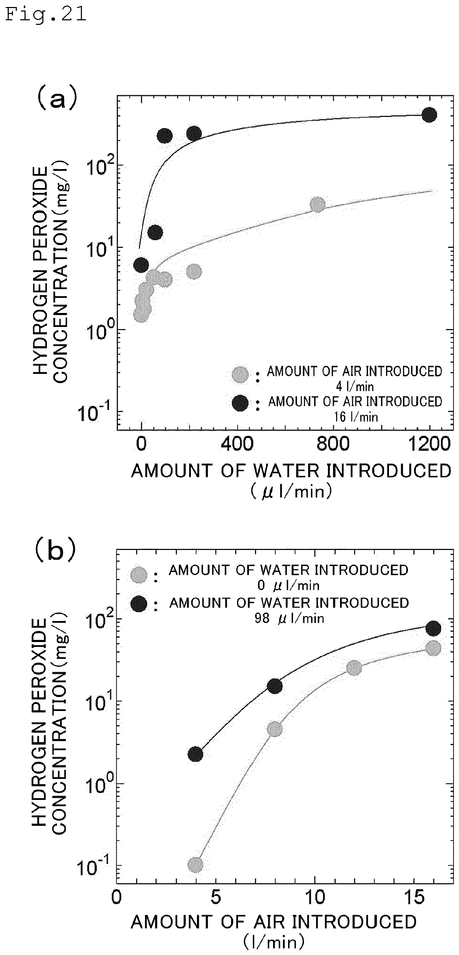

Preferably, in the method of eradicating pathogens and pests causing diseases that affect crops, an application voltage is set at 10 to 20 kV (see Figs. 11 and 16), and 0.001 to 10 mL per hour of the water mist (see Figs. 14 and 15) is introduced. More preferably, 0.01 to 5 mL per hour of the water mist is introduced. The amount of gas supplied is preferably set at 7 to 20 liters / minute (see Fig. 21). Further, in the method of eradicating pathogens and pests according to the present invention, the OH radical generated using helium plasma or air plasma can be applied to an item to be sterilized or a pest to be killed for at least about 5 to 15 minutes.

The method of eradicating pathogens and pests and the devices 1, 20, 20A, 30, 40 and 50 for eradicating pathogens and pests according to the present invention can also be applied not only to normal farms, but also to cultivation using greenhouses, plant factories. In the method of eradicating pathogens and pests according to the present invention, the OH radical generated with the water such as water mist and the like and the plasma-forming gas is applied to crops, and thus it is not left on crops as pesticides are, with the result that it is safe. The OH radical may be applied to crops that are being grown or crops that are harvested. Furthermore, the application of the OH radical can be applied to the methods of eradicating pathogens and pests not only on crops, but also fertilizers, liquid fertilizers, water and soil given to crops and articles and the like used in farms and plant factories.

As the method of applying the OH radical to crops that are being grown, any method may be adopted. For example, the OH radical may be applied to crops while the device 50 for eradicating pathogens and pests is placed on a moving vehicle such as a tractor or an automatic guided vehicle and the moving vehicle is moved along the direction of the ridges of a farmland where crops are being grown. The following method may be adopted: in a house or the like, a rail is attached along a ceiling above crops being grown, the devices 1, 20, 20A, 30, 40 and 50 for eradicating pathogens and pests are suspended from an automatic guided vehicle or the like that can move along the rail and the OH radical is applied from above the crops while the automatic guided vehicle or the like is being moved. The following method may also be adopted: a pot or the like where crops are grown is provided so as to be able to be moved along a movement path such as a rail and the like, the devices 1, 20, 20A, 30, 40 and 50 for eradicating pathogens and pests are arranged beside the movement path and the OH radical is sequentially applied to crops that are moved to the movement path. Further, the following method may be adopted: the devices 1, 20, 20A, 30, 40 and 50 for eradicating pathogens and pests are placed on a flight vehicle such as a helicopter, a radio-controlled helicopter or a radio-controlled airplane, and the OH radical is applied to crops from the sky.

The non-therapeutic method of eradicating pathogens and pests and the devices 1, 20, 20A, 30, 40 and 50 for eradicating pathogens and pests according to the present invention may be used not only in the field of agriculture but also in hospitals and nursing homes and for virus removal, air cleaning and deodorizing in places such as homes.

As described above, the method of eradicating pathogens and pests according to the present invention is characterized in that the water such as water mist and the like is introduced into the reaction container 2, the plasma-forming gas is supplied from the gas supply portion 3 to the reaction container 2, voltage is applied between the positive electrode 6 and the negative electrode 5 provided in the reaction container 2 to discharge the gas and generate the OH radical, the OH radical is applied to pests and pathogens of microorganisms such as virus, eubacteria, fungi and protozoa called "pathogenic agents" in plants, and thus they are eradicated.

The present invention will be described below in further detail using an Example.

### [Example]

The device 1 for eradicating pathogens and pests shown in Fig. 1 was produced.

As the reaction container 2, a container was used which was formed of quartz and whose inside diameter was 3 mm, outside diameter was 6 mm and length was 110 mm. As the negative electrode, stainless steel was used. As the positive electrode, tungsten was used. Water was supplied from a pump to the water supply portion 4, and a gas was also supplied thereto, and water mist was supplied into the reaction container 2. As the gas, at room temperature, argon and helium whose pressures were 0 to 0.2 MPa were supplied to the gas carrier tube 3a.

The gas was passed to the gas carrier tube 3a while the amount of gas passed was being controlled by the mass flow controller, discharge under atmospheric pressure was performed while the gas was issued from the gas carrier tube 3a under atmospheric pressure and room temperature. The application voltage V was set at 2 to 25 kV to perform discharge, and the OH radical generated by the discharge was detected with a spectroscope. No ozone odor was produced.

### (Plasma discharge using helium or argon)

The outline of discharge conditions under atmospheric pressure is shown below.
Gas: helium or argon
Application voltage: V = 0 to 25 kV
Frequency: f = 5 to 20 kHz
Amount of water introduced: 0.001 to 20 mL / hour (L represents liter)
Amount of gas passed: F_{gas} = 1 to 10 L / minute

### (Plasma discharge using helium or argon)

Fig. 9 is a diagram showing emission spectroscopic spectra of the plasma by helium gas and the water mist. As is clear from Fig. 9, light emitted by the OH radical whose spectroscopic wavelength was 309 nm and light emitted by He whose spectroscopic wavelength was 700 nm were observed.

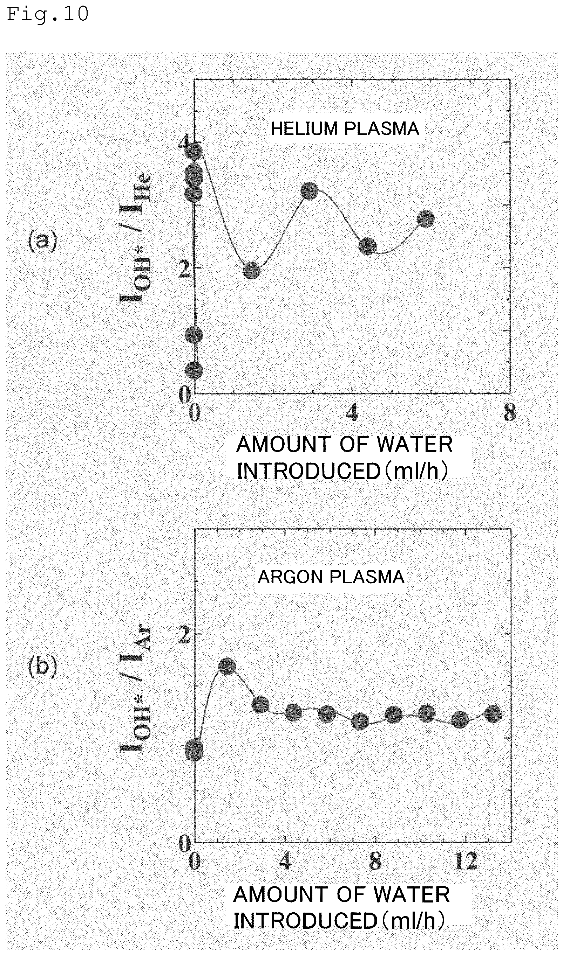

Fig. 10 is a diagram showing the dependence of the OH radical on the amount of water introduced and the dependence of an emission intensity ratio on helium and argon; Fig. 10(a) shows the case of helium plasma and Fig. 10(b) shows the case of argon plasma. The horizontal axis represents the amount of water introduced (mL / hour), and the vertical axis represents the emission intensity ratio (OH radical / He). As is clear from Fig. 10(a), it is found that in the case of helium plasma, the emission intensity ratio (OH radical / He) is rapidly increased when the amount of water introduced is 0.001 mL / hour or more, and that in the range of 2 to 6 mL / hour, the emission intensity ratio changed in a concave/convex shape. As is clear from Fig. 10(b), it is found that in the case of argon plasma, the emission intensity ratio (OH radical / He) is rapidly increased when the amount of water introduced is 0.1 mL / hour or more, and that in the range of 2 to 6 mL / hour, the emission intensity ratio remains substantially constant.

### (Application voltage dependence)

Fig. 11 is a diagram showing the dependence of the OH radical on the application voltage and the dependence of the emission intensity ratio on helium and argon; Fig. 11(a) shows the case of helium plasma and Fig. 11(b) shows the case of argon plasma. The horizontal axis of Fig. 11 represents the application voltage (kV), and the vertical axis represents the emission intensity ratio (OH radical / He). As is clear from Fig. 11(a), in the case of helium plasma, the emission intensity ratio (OH radical / He) is 1 when the application voltage is 10 kV, the emission intensity ratio is increased as the application voltage is increased and the emission intensity ratio reaches its peak of about 9 when the application voltage is about 14 kV. It is found that thereafter, even when the application voltage is increased to 17 kV, the emission intensity ratio is monotonously reduced from 9 to 6. As is clear from Fig. 11(b), in the case of argon plasma, the emission intensity ratio (OH radical / He) is 0.5 when the application voltage is 9 kV, the emission intensity ratio is increased as the application voltage is increased and the emission intensity ratio constantly remains about 0.9 when the application voltage is about 14 to 24 kV.

### (Plasma discharge using air)

The device 20 for eradicating pathogens and pests shown in Fig. 3 was produced. As the reaction container 2, a container was used which was formed of quartz and whose inside diameter was 4 mm, outside diameter was 6 mm and length was 85 mm. As the insertion portion 25b of the negative electrode 25, an injection needle was used. Water was supplied to the injection needle from a pump, and water mist was supplied from the water supply portion 4 into the reaction container 2. A gas was supplied from the gas supply portion 3 into the reaction container 2. The positive electrode 26 inserted into the reaction container 2 was a wire bundle made of tungsten, and 5 wires having a diameter of 0.5 mm were used. As the gas, under atmospheric pressure and room temperature, any of argon, oxygen and air was supplied to the gas carrier tube 3a.

The gas was passed to the gas carrier tube 3a while the amount of gas passed was being controlled by the mass flow controller, discharge under atmospheric pressure was performed while the gas was issued from the gas carrier tube 3a under atmospheric pressure and room temperature. The application voltage V was changed in a range of 0 to 25 kV to perform discharge, and the OH radical generated by the discharge was detected with a spectroscope. No ozone odor was produced.

The outline of discharge conditions in which the pressure of air was 0.05 MPa (about 0.5 atmospheres) is shown below.
Gas: air
Application voltage: V = 10 to 25 kV
Frequency: f = 5 to 20 kHz
Amount of water introduced: 0 to 13 mL / hour

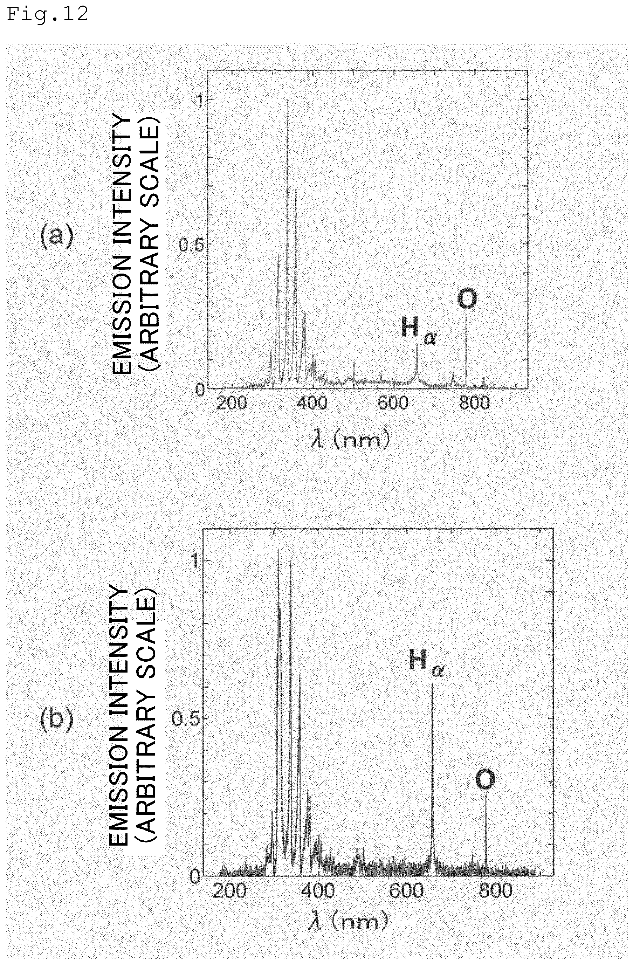

Fig. 12 is a diagram showing emission spectroscopic spectra of plasma by air depending on the presence of the water mist; Fig. 12(a) shows a case where the water mist is not added and Fig. 12(b) shows a case where the water mist is added. Fig. 13 is an enlarged diagram of the emission spectroscopic spectra of Fig. 12 in a wavelength range of 300 to 350 nm. As is clear from Fig. 12(b), it is found that in the case where the water mist is added to the air plasma, as compared with the case where the water mist is not added (see Fig. 12(a)), Hα light emission of 656 nm by hydrogen (H) is increased, and that furthermore, an emission intensity in the vicinity of 309 nm, which is the light emission wavelength of the OH radical is increased. The light emission of oxygen (O) is 777 nm. With respect to the details of 300 to 350 nm in the emission spectroscopic spectra, as is clear from Fig. 13, it is found that in the case where the water mist is added, as compared with the case where the water mist is not added, the intensity of the OH radical in 309 nm is increased three times or more, and that the light emission of nitrogen (N₂) included in the air in 337 nm has substantially the same intensity regardless of whether the water mist is added.

Fig. 14 is a diagram showing the dependence of the OH radical on the amount of water introduced and the dependence of the emission intensity ratio on N₂. The horizontal axis of Fig. 14 represents the amount of water introduced (mL / hour), and the vertical axis represents the emission intensity ratio (OH radical / N₂). As is clear from Fig. 14, it is found that in the case of air plasma, the emission intensity ratio (OH radical / N₂) is changed in a range of about 0.4 to 0.7 when the amount of water introduced ranged from about 1 to 10 ml / hour, the emission intensity ratio was increased to about 0.4 to 1 when the amount of water introduced ranged from 10 to 12 mL / hour and thereafter the emission intensity ratio was reduced to about 0.9 when the amount of water introduced ranged from about 12 to 14.5 mL / hour.

Fig. 15 is a diagram showing the dependence of the OH radical on the amount of water introduced and the dependence of the emission intensity ratio on helium. The horizontal axis of Fig. 15 represents the amount of water introduced (mL / hour), and the vertical axis represents the emission intensity ratio (OH radical / He). As is clear from Fig. 15, it is found that in the case of helium plasma, the emission intensity ratio (OH radical / He) is increased to about 2.3 to 3.2 when the amount of water introduced ranged from 0 to 4 mL / hour, and thereafter the emission intensity ratio (OH radical / He) is saturated at 3.3 to 3.6 even when the amount of water introduced is increased in a range of 12 to 14.5 mL / hour. No ozone odor was produced.

### (Dependence of air plasma on application voltage)

Fig. 16 is a diagram showing the dependence of the application voltage on the emission intensity of the OH radical and N₂. The horizontal axis of Fig. 16 represents the application voltage (kV), and the vertical axis represents the emission intensity (arbitrary scale). As is clear from Fig. 16, the light emission of the OH radical is performed when the application voltage is 14 kV or more, and even when the application voltage is increased to about 24 kV, the emission intensity remains substantially constant. It is found that the emission intensity of N₂ occurs when the application voltage is about 14 kV or more, thereafter the application voltage reaches the maximum value at 18 kV and thereafter when the application voltage is further increased, the emission intensity of N₂ is reduced. In other words, it is found that the application voltage changes in the shape of a large mountain in a range of about 14 to about 24 kV.

### (Dependence of helium plasma on application voltage)

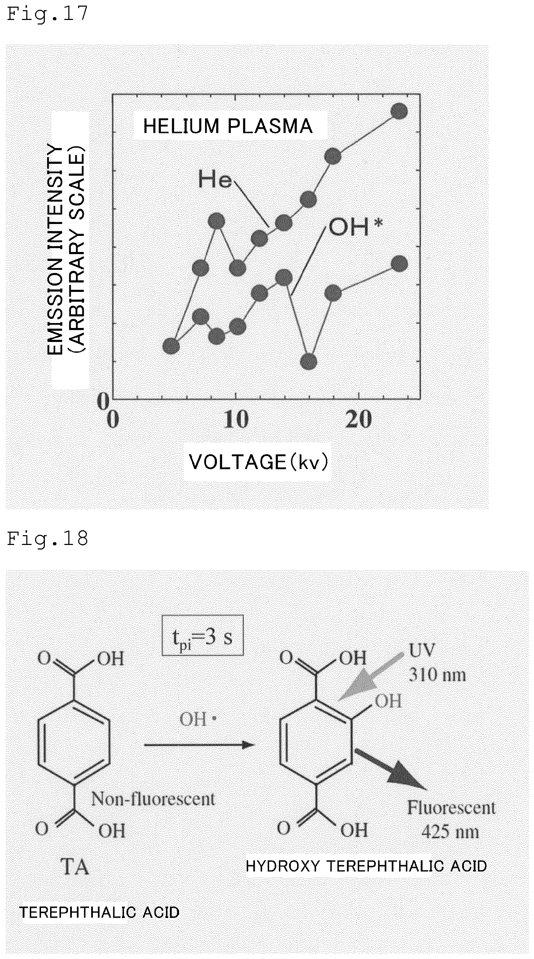

Fig. 17 is a diagram showing the dependence of the application voltage on the emission intensity of the OH radical and helium. The horizontal axis of Fig. 17 represents the application voltage (kV), and the vertical axis represents the emission intensity (arbitrary scale). As is clear from Fig. 17, the emission intensity of the OH radical occurs when the application voltage is 4 kV or more, and the emission intensity of the OH radical is increased as the application voltage is increased. It is found that the light emission of helium occurs when the application voltage is about 4 kV or more, and thereafter when the application voltage is increased to about 23.5 kV, the light emission of helium is increased proportionally to the application voltage.

Consequently, it is found that, similar to helium plasma, by the introduction of the water mist, it is possible to generate the OH radical almost proportionally to the amount of water mist introduced, even in plasma discharge by air.

### (Measurement of density of OH radical)

A method of measuring the density of the OH radical generated in the device 1 for eradicating pathogens and pests will be described next.

For the application to sterilize and kill pests by the OH radical generated in the device 1 for eradicating pathogens and pests, the hydroxylation of terephthalic acid was performed with the OH radical, the fluorescence thereof was measured and thus the density of the OH radical was measured.

Fig. 18 is a diagram schematically showing a method of measuring the density of the OH radical by the utilization of the hydroxylation of terephthalic acid by the OH radical. As shown in Fig. 18, the OH radical reacts with terephthalic acid to generate hydroxy terephthalic acid (hydroxylation). When violet light of 310 nm is applied to the hydroxy terephthalic acid, a fluorescence having a wavelength of 425 nm is produced. The intensity of the fluorescence is increased proportionally to amount of the hydroxy terephthalic acid produced by the reaction of the OH radical with terephthalic acid.

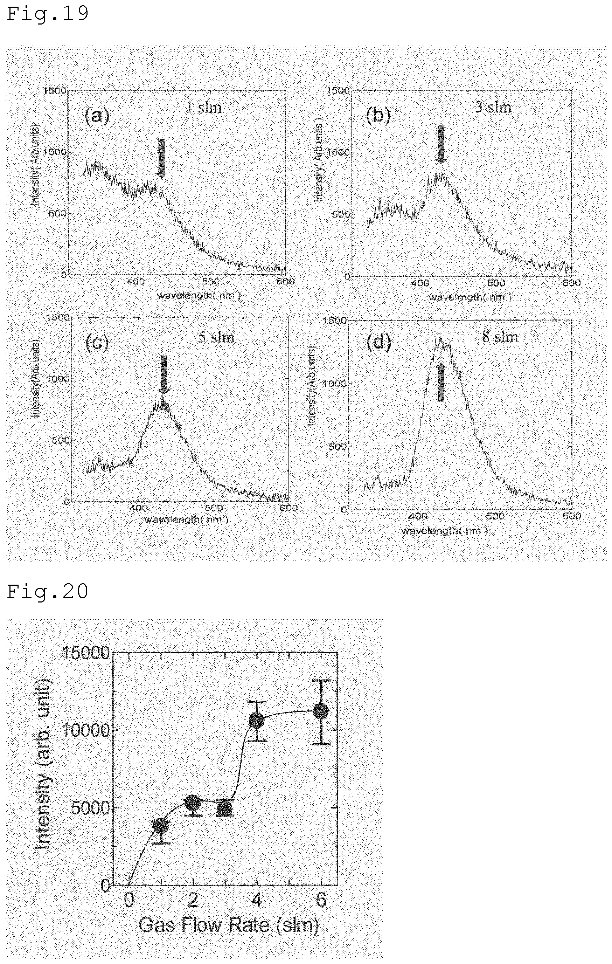

Fig. 19 is a diagram showing emission spectra of the fluorescence generated by the hydroxylation of terephthalic acid when the amount of helium gas passed is changed; Fig. 19(a) shows the case of 1 slm, Fig. 19(b) shows the case of 3 slm, Fig. 19(c) shows the case of 5 slm, and Fig. 19(d) shows the case of 8 slm. Herein, slm refers to standard liter / minute, and represents the unit L / minute. The horizontal axis of Fig. 19 represents the wavelength (nm), and the vertical axis represents the emission intensity (arbitrary scale). As is clear from Fig. 19, it is found that the fluorescent intensity having a wavelength of 425 nm (a position indicated by an arrow in the figure), that is, the density of the OH radical is increased as the amount of helium gas passed is increased from 1 slm to 3 slm, to 5 slm and to 8 slm.

Fig. 20 is a diagram showing the dependence of the fluorescent intensity on the amount of helium gas passed. The horizontal axis of Fig. 20 represents the amount of helium gas passed (slm), and the vertical axis represents the fluorescent intensity (arbitrary scale). As is clear from Fig. 20, it is found that the fluorescent intensity, that is, the density of the OH radical is increased substantially proportionally to the amount of helium gas passed. Consequently, it is found that with the device 1 for eradicating pathogens and pests according to the present invention, by changing the amount of helium gas passed, it is possible to efficiently generate the OH radical.

### (Dependence of OH radical on the amount of water introduced and the amount of air introduced)

The concentration of hydrogen peroxide in plasma generated when the amount of water introduced and the amount of air introduced were changed with the device 1 for eradicating pathogens and pests shown in Fig. 1 was measured. In the measurement of the concentration of hydrogen peroxide, a pack test (registered trademark; made by KYORITSU CHEMICAL-CHECK Lab., Corp.) was used. The reagents of the pack test were an enzyme (peroxidase) and 4-aminoantipyrine. In the measurement, in a position where the distance over which the plasma was applied was 30 to 200 mm, a dish into which pure water (2.4 mL) was put was placed, and an item obtained by the application of the plasma to the pure water was used as a specimen. The distance over which the plasma was applied was set at 50 mm, the time during which the plasma was applied when the amount of water introduced was changed was set at 10 minutes and the time during which the plasma was applied when the amount of air introduced was changed was set at 1 minute. The voltage and the frequency when the plasma was applied were set at 11. 5 kV and 8.3 kHz, respectively.

Fig. 21(a) shows results when the amount of water introduced was changed, and Fig. 21(b) shows results when the amount of air introduced was changed. As shown in Fig. 21(a), it is found that when the amount of water introduced is increased to 100 to 200 µL / minute, as compared with the case where water is not introduced, the concentration of hydrogen peroxide is significantly increased by 2 to 10 times. As shown in Fig. 21(b), it is found that when the amount of air introduced is increased by four times from 4 L / minute to 16 L / minute, the concentration of hydrogen peroxide is increased by 10 to 100 times or more. In particular, it is found that when the amount of air introduced is 7 L / minute or more, the concentration of hydrogen peroxide is increased. It is thought that since the OH radical is generated by the utilization of hydrogen peroxide, as the amount of water introduced is increased and the amount of air introduced is increased, the OH radical is increased by substantially the same amount as the increase in hydrogen peroxide.

### (Dependence of OH radical on time during which plasma is applied and distance over which plasma is applied)

The density of the OH radical and the concentration of hydrogen peroxide in plasma generated when the time during which the plasma was applied and the distance over which the plasma was applied were changed with the device 1 for eradicating pathogens and pests shown in Fig. 1 were measured. The measurement of the density of the OH radical was performed by the utilization of the fluorescent intensity having a wavelength of 425 nm based on Fig. 18, and the measurement of the concentration of hydrogen peroxide was performed with the pack test. The voltage, the frequency, the amount of air introduced and the amount of water introduced when the plasma was applied were set at 11. 7 kV, 8.3 kHz, 16 L / minute, and 91 µL / minute, respectively. The distance over which the plasma was applied when the time during which the plasma was applied was changed was set at 30 mm, and the time during which the plasma was applied when the distance over which the plasma was applied was changed was set at 15 minutes.

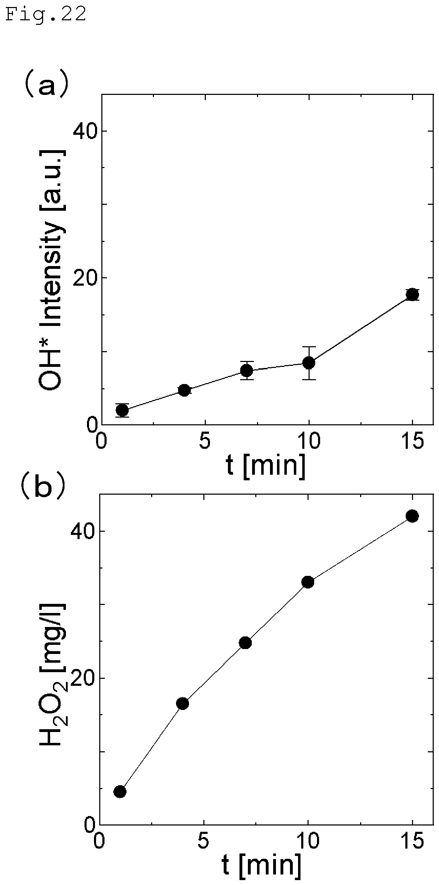

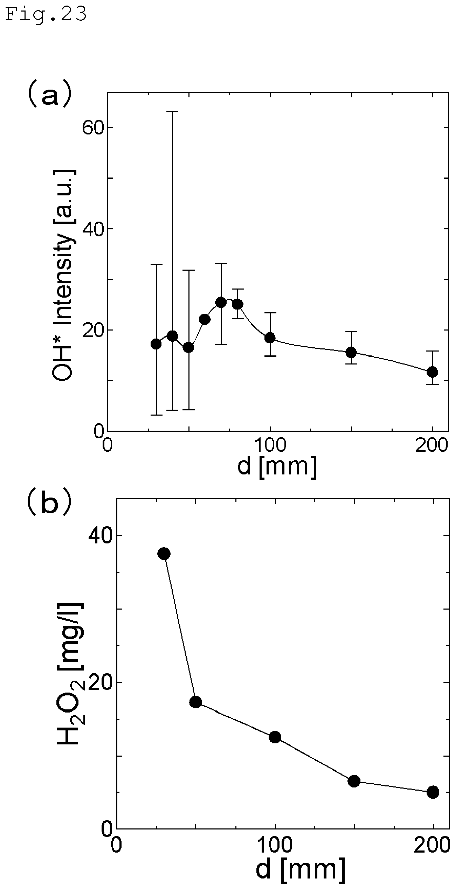

Fig. 22 shows results when the time t during which the plasma was applied was changed, and Fig. 23 shows results when the distance d over which the plasma was applied was changed. Changes in the density of the OH radical are shown in Figs. 22(a) and 23(b), and changes in the concentration of hydrogen peroxide are shown in Figs. 22(b) and 23(b). As shown in Fig. 22, it is found that as the time t during which the plasma was applied was increased, the density of the OH radical and the concentration of hydrogen peroxide tended to be increased. As shown in Fig. 23(a), it is found that the density of the OH radical was increased when the distance d over which the plasma was applied was in the range of 60 to 100 mm, and that the density of the OH radical was the maximum at around 70 mm. As shown in Fig. 23(b), it is found that as the distance d over which the plasma was applied was increased, the concentration of hydrogen peroxide tended to be decreased.

When the above-described device for eradicating pathogens and pests was used, no ozone odor was produced.

### (Sterilization by OH radical)

A test for checking sterilization effects on pathogens was performed. In the test, pathogens for crops were mainly used, and how the pathogens were changed after the application of the OH radical was observed with a microscope.

### (Sterilization on lily leaf blight fungi (scientific name: Botrytis elliptica))

Lily leaf blight fungi were cultured in a PDA medium, then for each PDA medium, the lily leaf blight fungi were cut into the size of a 5 mm square, the device 1 for eradicating pathogens and pests shown in Fig. 1 was used to apply the OH radical generated by addition of the water mist to He plasma and then it was divided into 9 pieces and was cultured with the PDA medium at 20°C for 2 days. The distance between a reaction container and the PDA medium was set at about 5 cm. An application voltage V and the amount of water introduced at the time of discharge were set at 10 to 20 kV and 0.1 to 5 mL / hour, respectively.

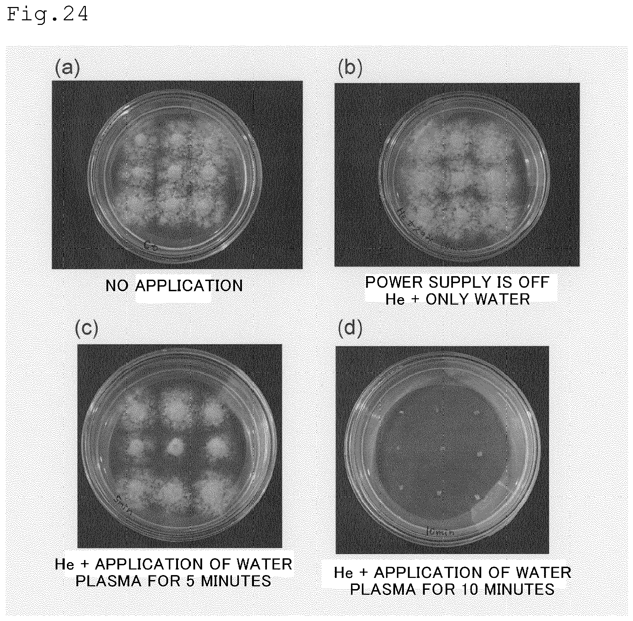

Fig. 24 is a diagram showing microscope images of the lily leaf blight fungi two days after the application of the OH radical generated by the helium plasma; Fig. 24(a) shows the fungi when the OH radical was not applied, Fig. 24(b) shows the fungi when the power supply portion 7 was turned off and He and the water mist were applied for 10 minutes, Fig. 24(c) shows the fungi when the OH radical was applied for 5 minutes, and Fig. 24(d) shows the fungi when the OH radical was applied for 10 minutes. As shown in Fig. 24, it is found that the lily leaf blight fungi were killed by the application of the OH radical for 10 minutes.

The device 20A for eradicating pathogens and pests shown in Fig. 4 was used to apply the OH radical generated by addition of the water mist to air plasma to the PDA medium, as with the He plasma, and then it was divided into 9 pieces and was cultured with the PDA medium at 20°C for 2 days. The distance between the reaction container and the PDA medium was set at about 1 cm. The application voltage V and the amount of water introduced at the time of discharge were set at 10 to 20 kV and 0.1 to 5 mL / hour, respectively.

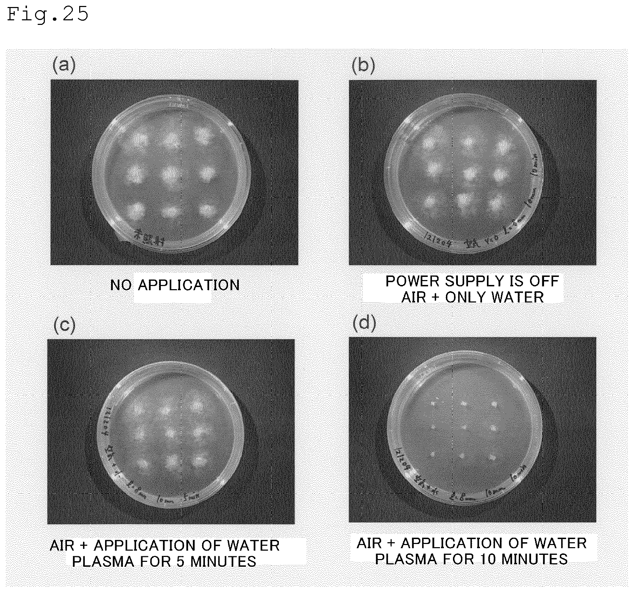

Fig. 25 is a diagram showing microscope images of the lily leaf blight fungi two days after the application of the OH radical generated by the air plasma; Fig. 25(a) shows the fungi when the OH radical was not applied, Fig. 25(b) shows the fungi when the power supply portion 7 was turned off and the air and the water mist were applied for 10 minutes, Fig. 25(c) shows the fungi when the OH radical was applied for 5 minutes, and Fig. 24(d) shows the fungi when the OH radical was applied for 10 minutes. As shown in Fig. 25, it is found that the lily leaf blight fungi were killed by the application of the OH radical for 10 minutes.

Next, tests when the water mist was introduced with the device 1 for eradicating pathogens and pests shown in Fig. 1 and when the water mist was not introduced and tests when the water mist was introduced in a case where the temperature state at the time of application of plasma was reproduced by a dryer without the application of plasma and when the water mist was not introduced were performed. After the application of the plasma or after the application of the wind of the dryer, the lily leaf blight fungi were cultured with the PDA medium at 20°C for 10 days, and their changes were observed. The reproduction of the temperature state by the dryer was performed by the utilization of results obtained by measuring the temperature state at the time of application of plasma with a radiation thermometer and by the application of the wind of the dryer while the temperature was being measured with the radiation thermometer. The time during which the plasma was applied and the time during which the wind of the dryer was applied were set at 10 minutes, and the distance over which the plasma was applied and the distance over which the wind of the dryer was issued were set at 30 mm. The voltage, the frequency, the amount of air introduced and the amount of water introduced when the plasma was applied were set at 11. 5 kV, 8.3 kHz, 16 L / minute and 98 µL /minute, respectively.

The results of the tests are shown in Fig. 26. Fig. 26(a) shows results when the plasma was applied without the introduction of the water mist, Fig. 26(b) shows results when the wind of the dryer was applied without the introduction of the water mist, Fig. 26(c) shows results when the water mist was introduced and the plasma was applied, Fig. 26(d) shows results when the water mist was introduced and the wind of the dryer was applied, and Fig. 26(e) shows results when the application of the plasma, the dryer and the introduction of the water were not performed for comparison. As shown in Fig. 26, when the plasma was applied (Figs. 26(a) and 26(c)), regardless of whether the water mist was introduced, the fungi had not propagated even by being cultured for 10 days, with the result that it is found that sterilization effects were obtained. By contrast, when the wind of the dryer was applied (Figs. 26(b) and 26(d)), regardless of whether the water mist was introduced, the fungi had propagated, with the result that it is found that sterilization effects cannot be obtained. Consequently, it can be said that the sterilization effects obtained in Figs. 26(a) and 26(c) were acquired not by heat but by a factor other than heat.

### (Sterilization on chrysanthemum white rust leaf fungi (scientific name: Puccinia horiana Hennings))

As with lily leaf blight fungi, chrysanthemum white rust leaf fungi were cultured in a PDA medium, then the PDA medium was cut into the size of a 5 mm square and, after the application of the OH radical, it was divided into 9 pieces and was cultured with the PDA medium at 20°C for 4 days. The OH radical was generated using helium plasma. The application voltage V and the amount of water introduced at the time of discharge were set at 10 to 20 kV and 0.1 to 5 mL / hour, respectively.

Fig. 27 is a diagram showing microscope images of the chrysanthemum white rust leaf fungi four days after the application of the OH radical. As shown in Fig. 27, it is found that the chrysanthemum white rust leaf fungi were killed by the application of the OH radical.

### (Sterilization on bakanae disease fungi (scientific name: Gibberella fujikuroi))

The device 1 for eradicating pathogens and pests shown in Fig. 1 was used to apply the plasma to bakanae disease fungi every day, and their changes when the application time was changed were checked. The bakanae disease fungi were cultured with the PDA medium at 20°C for 24 days, and in the meantime, their changes by the application of the plasma were observed. The time during which the plasma was applied was set at 15 minutes per day, 10 minutes per day and 4 minutes per day, and the distance over which the plasma was applied was set at 100 mm. The voltage, the frequency, the amount of air introduced and the amount of water introduced when the plasma was applied were set at 11.5 kV, 8.3 kHz, 16 L / minute and 98 µL /minute, respectively.

The results of the tests are shown in Fig. 28. Fig. 28(a) shows results when the time during which the plasma was applied was set at 15 minutes per day, Fig. 28(b) shows results when the time during which the plasma was applied was set at 10 minutes per day, Fig. 28(c) shows results when the time during which the plasma was applied was set at 4 minutes per day, Fig. 28(d) shows results when the plasma was not applied and only air was blown for 4 minutes per day for comparison, and Fig. 28(e) shows results when the plasma was not applied for comparison. As shown in Fig. 28, when the plasma was applied for 15 minutes per day (Fig. 28(a)) and when the plasma was applied for 10 minutes per day (Fig. 28(b)), the fungi were gradually reduced, with the result that it is found that sterilization effects were obtained. By contrast, when the plasma was applied for 4 minutes per day (Fig. 28(c)), it is found that although the effect of reducing the propagation of the fungi was obtained, the fungi were gradually propagated, and sterilization effects cannot be obtained.

Their changes when the interval at which the plasma was applied to the bakanae disease fungi was changed were checked next. The bakanae disease fungi were cultured with the PDA medium at 20°C for 26 days, and in the meantime, their changes by the application of the plasma were observed. The time during which the plasma was applied once was set at 15 minutes, and the distance over which the plasma was applied was set at 100 mm. The voltage, the frequency, the amount of air introduced and the amount of water introduced when the plasma was applied were set at 11.5 kV, 8.3 kHz, 16 L / minute and 98 µL /minute, respectively.

The results of the tests are shown in Fig. 29. Fig. 29(a) shows results when the plasma was applied every day, Fig. 29(b) shows results when the plasma was applied every two days, Fig. 29(c) shows results when the plasma was applied every five days, Fig. 29(d) shows results when the plasma was not applied and only air was blown every day for comparison, and Fig. 29(e) shows results when the plasma was not applied for comparison. As shown in Fig. 29, when the plasma was applied every day (Fig. 29(a)), the fungi were gradually reduced, with the result that it is found that sterilization effects were obtained. By contrast, when the plasma was applied every two days (Fig. 29(b)) and when the plasma was applied every five days (Fig. 29(c)), it is found that although the effect of reducing the propagation of the fungi was obtained, the fungi were gradually propagated, and sterilization effects cannot be obtained.

### (Sterilization on botrytis cinerea fungi (scientific name: Botryotinia fuckeliana))

The device 1 for eradicating pathogens and pests shown in Fig. 1 was used to apply the plasma to botrytis cinerea fungi when the water mist was introduced and when the water mist was not introduced, and their changes when the application time was changed were checked. After the application of the plasma, the botrytis cinerea fungi were cultured with the PDA medium at 20°C for 10 days, and their changes were observed. The time during which the plasma was applied was set at 15 minutes, 10 minutes, 7 minutes, 2 minutes and 1 minute, and the distance over which the plasma was applied was set at 100 mm. The voltage, the frequency and the amount of air introduced when the plasma was applied were set at 11.5 kV, 8.3 kHz and 16 L / minute, respectively. The amount of water introduced when the water mist was introduced was set at 117 µL / minute when the application time was 1 to 4 minutes, and was set at 91 µL / minute when the application time was 7 to 15 minutes.

The results of the tests when the water mist was not introduced are shown in Fig. 30, and the results of the tests when the water mist was introduced are shown in Fig. 31. Figs. 30(a) and 31(a) show results when the time during which the plasma was applied was set at 15 minutes, Figs. 30(b) and 31(b) show results when the time during which the plasma was applied was set at 10 minutes, Figs. 30(c) and 31(c) show results when the time during which the plasma was applied was set at 7 minutes, Figs. 30(d) and 31(d) show results when the time during which the plasma was applied was set at 2 minutes, Figs. 30(e) and 31(e) show results when the time during which the plasma was applied was set at 1 minute and Figs. 30(f) and 31(f) show results when the plasma was not applied for comparison. As shown in Figs. 30 and 31, when the plasma was applied for 15 minutes (Figs. 30(a) and 31(a)), regardless of whether the water mist was introduced, the fungi were not propagated even by being cultured for 10 days, with the result that it is found that sterilization effects were obtained. By contrast, when the plasma was applied for 10 minutes or less (Figs. 30(b) to 30(e) and Figs. 31(b) to 31(e)), regardless of whether the water mist was introduced, though the effect of reducing the propagation of the fungi was enhanced as the application time was prolonged, the fungi in all cases were gradually propagated, with the result that it is found that the sterilization effects were not obtained.

Then, the device 1 for eradicating pathogens and pests shown in Fig. 1 was used to apply the plasma to the spores of the botrytis cinerea fungi, and their changes when the application time and the application distance were changed were checked. After the application of the plasma, the spores of the botrytis cinerea fungi were cultured with the PDA medium at 20°C for 10 days, and their changes were observed. The time during which the plasma was applied was set at 15 minutes and 4 minutes, and the distance over which the plasma was applied was set at 200 and 100 mm. The voltage, the frequency, the amount of air introduced and the amount of water introduced when the plasma was applied were set at 11.7 kV, 8.3 kHz, 16 L / minute and 91 µL /minute, respectively. The density of the spores was set at 100 pieces / 10 µL.

The results of the tests are shown in Fig. 32. Fig. 32(a) shows results when the time during which the plasma was applied was set at 15 minutes and the distance over which the plasma was applied was set at 200 mm, Fig. 32(b) shows results when the time during which the plasma was applied was set at 15 minutes and the distance over which the plasma was applied was set at 100 mm, Fig. 32(c) shows results when the time during which the plasma was applied was set at 4 minutes and the distance over which the plasma was applied was set at 100 mm and Fig. 32(d) shows results when the plasma was not applied for comparison. As shown in Fig. 32, when the plasma was applied for 15 minutes (Figs. 32(a) and 32(b)), regardless of the application distance, the fungi were not propagated even by being cultured for 10 days, with the result that it is found that sterilization effects were obtained. By contrast, when the plasma was applied for 4 minutes (Fig. 32(c)), though the effect of reducing the propagation of the fungi was obtained, the fungi were gradually propagated, with the result that it is found that the sterilization effects were not obtained.

Next, after dropping various concentrations of hydrogen peroxide into the botrytis cinerea fungi, they were cultured with the PDA medium at 20°C for 7 days, and their changes were observed. The concentrations of hydrogen peroxide were set at 1000, 620, 250 and 100 mg / L, and 100 µL of each thereof was dropped.

The results of the tests are shown in Fig. 33. Fig. 33(a) shows results when the concentration of hydrogen peroxide was 1000 mg /L, Fig. 33(b) shows results when the concentration of hydrogen peroxide was 625 mg /L, Fig. 33(c) shows results when the concentration of hydrogen peroxide was 250 mg /L, Fig. 33(d) shows results when the concentration of hydrogen peroxide was 100 mg / L, Fig. 33(e) shows results when instead of hydrogen peroxide, pure water was dropped for comparison, and Fig. 33(f) shows results when nothing was dropped for comparison. As shown in Fig. 33, though the effect of reducing the propagation of the fungi was enhanced as the concentration of hydrogen peroxide was increased, the fungi in every case were gradually propagated, with the result that it is found that the sterilization effects were not obtained. Consequently, it can be thought that the sterilization effects when the plasma was applied do not result from hydrogen peroxide, and that they result from the OH radical.

### (Killing of pests with OH radical)

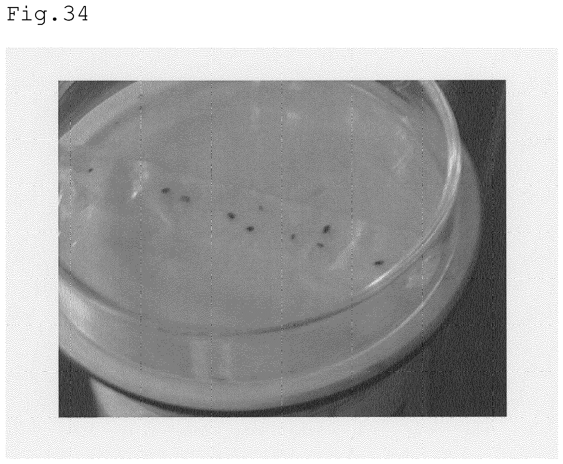

Tests for checking sterilization effects on pests were performed. The device 1 for eradicating pathogens and pests shown in Fig. 1 was used to apply the OH radical generated with helium plasma to aphids. The application voltage V at the time of discharge and the amount of water introduced were set at 10 to 20 kV and 0.1 to 5 mL / hour, respectively. Fig. 34 is a diagram showing microscope images of the aphids when the OH radical was applied to the aphids. As shown in Fig. 34, when the OH radical was applied to the aphids, the aphids were killed or debilitated. The individuals thereof were checked visually or by microscope observation.

Then, the device 1 for eradicating pathogens and pests shown in Fig. 1 was used to apply the OH radical generated with helium plasma to mites. The application voltage V at the time of discharge and the amount of water introduced were set at 10 to 20 kV and 0.1 to 5 mL / hour, respectively. It was confirmed by microscope observation that the individuals to which the OH radical was applied were killed after a few days. On the other hand, the mites to which the OH radical was not applied survived.

Consequently, it can be confirmed that preferably, in the eradication of pathogens and pests that cause diseases on crops, the application voltage is set at 10 to 20 kV (see Figs. 11 and 16), 0.001 to 10 mL of water mist per hour (see Figs. 14 and 15) is introduced, the amount of gas such as helium or air supplied is set at 7 to 20 liters / minute (see Fig. 21) and the OH radical generated with helium plasma or air plasma is applied to the pathogens and pests for at least 5 to 15 minutes.

In the present invention, the amount of OH radical is controlled depending on the inside diameter of the reaction container 2, the length of the negative electrode 5 and the positive electrode 6, the surface area of the electrode, the range of the voltage and the amount of water mist etc. introduced in the device 1 for eradicating pathogens and pests used. The amount of OH radical is not limited to the range of 0.001 to 10 mL of water mist introduced per hour as described above and is also not limited to the application time of 5 to 15 minutes as described above.

### Reference Signs List

1, 20, 30: device for eradicating pathogens and pests
2: reaction container
3: gas supply portion
3a: gas carrier tube
4: water supply portion
4a: pump
4b: water mist generation unit
4c: water mist carrier gas supply unit
4d: water amount control device
5: negative electrode
6: positive electrode
7: power supply portion
8: outer coil
9: inside coil
25: negative electrode
25a: main body portion
25b: insertion portion
25c: linear member
25d: cooling means
26: positive electrode
26a: radial electrode portion

## Claims

1. A non-therapeutic method of eradicating pathogens and pests, comprising:
introducing water mist or water droplets into a reaction container;
supplying, from a gas supply portion, a plasma-forming gas to the reaction container;
applying a voltage between a positive electrode and a negative electrode provided in the reaction container to discharge the gas and introducing the water mist or water droplets into generated plasma to generate an OH radical; and
applying the OH radical to the pathogens or the pests to eradicate them.

2. The method of eradicating pathogens and pests according to claim 1,
wherein the water is water mist.

3. The method of eradicating pathogens and pests according to claim 1 or 2,
wherein the gas is at least one selected from the group consisting of air, helium and argon.

4. The method of eradicating pathogens and pests according to any one of claims 1 to 3, further comprising:
controlling an amount of the OH radical generated by controlling an amount of the water supplied and/or an amount of the gas supplied.

5. The method of eradicating pathogens and pests according to any one of claims 1 to 4,
wherein the pathogens is at least one selected from the group consisting of rice blast, wheat powdery mildew, soybean purpura, strawberry gray mold disease, cucumber gray mold disease, tomato gray mold disease, lily leaf blight, cucumber powdery mildew, strawberry powdery mildew, tomato leaf mold disease, onion rust disease, chrysanthemum white rust disease, green onion black spot disease, apple spot deciduous disease, cucumber brown spot disease, crown daisy anthrax, parsley leaf blight, apple brown spot disease and bakanae disease.

6. The method of eradicating pathogens and pests according to any one of claims 1 to 4,
wherein the pests are mites or aphids.

7. The method of eradicating pathogens and pests according to any one of claims 1 to 6,
wherein the OH radical is an OH radical that is generated by setting the voltage at 10 to 20 kV and introducing 0.001 to 10 mL of the water mist per hour.

8. The method of eradicating pathogens and pests according to any one of claims 1 to 7,
wherein the amount of the gas supplied is 7 to 20 liters / minute.

9. The method of eradicating pathogens and pests according to claim 7 or 8,
wherein the OH radical is further applied to the pathogens or the pests for at least 5 to 15 minutes.

10. An non-therapeutic eradicating method for agriculture,
wherein the eradicating method is comprising the method of eradicating pathogens and pests according to any one of claims 1 to 9.

11. A device for eradicating pathogens and pests, comprising:
a reaction container to generate plasma; a pair of electrodes; a water supply portion; a gas supply portion; and a power supply portion,
wherein one of the electrodes includes an insertion portion that is inserted into the reaction container,
the other electrode is arranged in a position opposite the insertion portion,
the water supply portion is provided such that the water supply portion can supply water through the insertion portion into the generated plasma, wherein the water is water mist or water droplets,
the gas supply portion is provided such that the gas supply portion can supply a plasma-forming gas to the reaction container and
the power supply portion is provided such that the power supply portion can apply a voltage between the insertion portion and the other electrode so as to generate an OH radical in the reaction container to which the water and the gas are supplied.

12. The device for eradicating pathogens and pests according to claim 11,
wherein the insertion portion is formed in a tubular shape, and the insertion portion can supply the water to the reaction container through an interior thereof.

13. The device for eradicating pathogens and pests according to claim 12,
wherein the insertion portion includes a linear member that is provided to protrude from a tip end to transmit the water passing through the interior and that is formed with a thin wire.

14. The device for eradicating pathogens and pests according to claim 12, further comprising:
a cooling means which is provided such that a gap is provided between the tip end and an outside surface of the insertion portion, that the tip end and the outside surface of the insertion portion are covered and that the water passing through the insertion portion is passed through the gap and is thereafter supplied to the reaction container.

15. The device for eradicating pathogens and pests according to claim 11 or 12,
wherein the water supply portion can supply water mist to the reaction container.

16. The device for eradicating pathogens and pests according to any one of claims 11 to 15,
wherein the other electrode includes a coil provided inside or outside the reaction container.

17. The device for eradicating pathogens and pests according to any one of claims 11 to 15,
wherein the other electrode includes a radial electrode portion formed with a plurality of thin wires.

18. The device for eradicating pathogens and pests according to any one of claims 11 to 17,
wherein the power supply portion is a pulse power supply.

19. The device for eradicating pathogens and pests according to claim 18,
wherein the power supply portion includes an alternating-current power supply.

20. A plasma device that is formed with the device for eradicating pathogens and pests according to any one of claims 11 to 19 and that is used in the eradicating method for agriculture according to claim 10.

## Patentansprüche

1. Nichttherapeutisches Verfahren zum Vernichten von Pathogenen und Schädlingen, umfassend:
Einleiten von Wassernebel oder Wassertröpfchen in einen Reaktionsbehälter;
Zuführen eines plasmabildenden Gases aus einem Gaszufuhrabschnitt zu dem Reaktionsbehälter;
Anlegen einer Spannung zwischen einer positiven Elektrode und einer negativen Elektrode, die im Reaktionsbehälter vorgesehen ist, um eine Gasentladung zu erzeugen, und Einleiten des Wassernebels oder der Wassertröpfchen in erzeugtes Plasma, um ein OH-Radikal zu erzeugen; und
Anwenden des OH-Radikals auf die Pathogene oder die Schädlinge, um diese zu vernichten.

2. Verfahren zum Vernichten von Pathogenen und Schädlingen nach Anspruch 1,
wobei das Wasser Wassernebel ist.

3. Verfahren zum Vernichten von Pathogenen und Schädlingen nach Anspruch 1 oder 2,
wobei das Gas mindestens eines ist, ausgewählt aus der Gruppe bestehend aus Luft, Helium und Argon.

4. Verfahren zum Vernichten von Pathogenen und Schädlingen nach einem der Ansprüche 1 bis 3, ferner umfassend:
Steuern einer Menge des erzeugten OH-Radikals durch Steuern einer Menge an zugeführtem Wasser und/oder einer Menge an zugeführtem Gas.

5. Verfahren zum Vernichten von Pathogenen und Schädlingen nach einem der Ansprüche 1 bis 4,
wobei das Pathogen mindestens eines ist, ausgewählt aus der Gruppe bestehend aus Reisbräune, Weizenmehltau, *Cercospora kikuchii*, Grauschimmelfäule bei Erdbeeren, Grauschimmelfäule bei Gurken, Grauschimmelfäule bei Tomaten, *Botrytis elliptica*, Gurkenmehltau, Erdbeermehltau, Samtfleckenkrankheit bei Tomaten, *Puccinia porri*, *Puccinia horiana*, *Aspergillus niger* in grünen Zwiebeln, Apfelschorf, eckige Blattfleckenkrankheit bei Gurken, Anthrax bei Kronenwucherblume, Schwarzfäule, Pilze, die braune Flecken an Äpfeln verursachen, und Bakanae-Krankheit.

6. Verfahren zum Vernichten von Pathogenen und Schädlingen nach einem der Ansprüche 1 bis 4,
wobei die Schädlinge Milben oder Blattläuse sind.

7. Verfahren zum Vernichten von Pathogenen und Schädlingen nach einem der Ansprüche 1 bis 6,
wobei das OH-Radikal ein OH-Radikal ist, das durch Einstellen der Spannung auf 10 bis 20 kV und Einleiten von 0,001 bis 10 ml Wassernebel pro Stunde erzeugt wird.

8. Verfahren zum Vernichten von Pathogenen und Schädlingen nach einem der Ansprüche 1 bis 7,
wobei die Menge des zugeführten Gases 7 bis 20 Liter/Minute beträgt.

9. Verfahren zum Vernichten von Pathogenen und Schädlingen nach Anspruch 7 oder 8,
wobei das OH-Radikal ferner mindestens 5 bis 15 Minuten lang auf die Pathogene oder die Schädlinge angewendet wird.

10. Nichttherapeutisches Vernichtungsverfahren für die Landwirtschaft,
wobei das Vernichtungsverfahren das Verfahren zum Vernichten von Pathogenen und Schädlingen nach einem der Ansprüche 1 bis 9 umfasst.

11. Vorrichtung zum Vernichten von Pathogenen und Schädlingen, umfassend:
einen Reaktionsbehälter zum Erzeugen von Plasma; ein Paar Elektroden; einen Wasserversorgungsabschnitt; einen Gasversorgungsabschnitt; und einen Stromversorgungsabschnitt,
wobei eine der Elektroden einen Einführabschnitt umfasst, der in den Reaktionsbehälter eingeführt wird,
die andere Elektrode in einer Position gegenüber dem Einführabschnitt angeordnet ist,
der Wasserversorgungsabschnitt derart vorgesehen ist, dass der Wasserversorgungsabschnitt Wasser durch den Einführabschnitt in das erzeugte Plasma zuführen kann, wobei das Wasser Wassernebel oder Wassertröpfchen ist,
der Gasversorgungsabschnitt derart vorgesehen ist, dass der Gasversorgungsabschnitt dem Reaktionsbehälter ein plasmabildendes Gas zuführen kann, und
der Stromversorgungsabschnitt derart vorgesehen ist, dass der Stromversorgungsabschnitt eine Spannung zwischen dem Einführabschnitt und der anderen Elektrode anlegen kann, um ein OH-Radikal in dem Reaktionsbehälter zu erzeugen, dem das Wasser und das Gas zugeführt werden.

12. Vorrichtung zum Vernichten von Pathogenen und Schädlingen nach Anspruch 11,
wobei der Einführabschnitt röhrenförmig ausgebildet ist und der Einführabschnitt das Wasser dem Reaktionsbehälter durch sein Inneres zuführen kann.

13. Vorrichtung zum Vernichten von Pathogenen und Schädlingen nach Anspruch 12,
wobei der Einführabschnitt ein lineares Element umfasst, das so vorgesehen ist, dass es von einem Spitzenende hervorsteht, um das durch das Innere strömende Wasser zu übertragen, und das mit einem dünnen Draht ausgebildet ist.

14. Vorrichtung zum Vernichten von Pathogenen und Schädlingen nach Anspruch 12, ferner umfassend:
eine Kühleinrichtung, die derart vorgesehen ist, dass ein Spalt zwischen dem Spitzenende und einer Außenfläche des Einführabschnitts vorgesehen ist, dass das Spitzenende und die Außenfläche des Einführabschnitts bedeckt sind und dass das durch den Einführabschnitt strömende Wasser durch den Spalt strömt und danach dem Reaktionsbehälter zugeführt wird.

15. Vorrichtung zum Vernichten von Pathogenen und Schädlingen nach Anspruch 11 oder 12,
wobei der Wasserversorgungsabschnitt dem Reaktionsbehälter Wassernebel zuführen kann.

16. Verfahren zum Vernichten von Pathogenen und Schädlingen nach einem der Ansprüche 11 bis 15,
wobei die andere Elektrode eine innerhalb oder außerhalb des Reaktionsbehälters vorgesehene Spule umfasst.

17. Verfahren zum Vernichten von Pathogenen und Schädlingen nach einem der Ansprüche 11 bis 15,
wobei die andere Elektrode einen radialen Elektrodenabschnitt umfasst, der mit einer Vielzahl an dünnen Drähten ausgebildet ist.

18. Verfahren zum Vernichten von Pathogenen und Schädlingen nach einem der Ansprüche 11 bis 17,
wobei der Stromversorgungsabschnitt eine Impulsstromversorgung ist.

19. Vorrichtung zum Vernichten von Pathogenen und Schädlingen nach Anspruch 18,
wobei der Stromversorgungsabschnitt eine Wechselstromversorgung umfasst.

20. Plasmavorrichtung, die mit der Vorrichtung zum Vernichten von Pathogenen und Schädlingen nach einem der Ansprüche 11 bis 19 ausgebildet ist und die im Vernichtungsverfahren für die Landwirtschaft nach Anspruch 10 verwendet wird.

## Revendications

1. Procédé non thérapeutique d'éradication d'agents pathogènes et d'organismes nuisibles, comprenant :
l'introduction d'un brouillard d'eau ou de gouttelettes d'eau dans un récipient de réaction ;
l'alimentation du récipient de réaction avec un gaz plasmagène en provenance d'une partie d'alimentation en gaz ;
l'application d'une tension entre une électrode positive et une électrode négative disposées dans le récipient de réaction pour créer une décharge dans le gaz et l'introduction du brouillard d'eau ou des gouttelettes d'eau dans le plasma généré pour générer un radical OH ; et
l'application du radical OH aux agents pathogènes ou aux organismes nuisibles pour les éradiquer.

2. Procédé d'éradication d'agents pathogènes et d'organismes nuisibles selon la revendication 1,
dans lequel l'eau est un brouillard d'eau.

3. Procédé d'éradication d'agents pathogènes et d'organismes nuisibles selon la revendication 1 ou 2,
dans lequel le gaz est au moins un gaz choisi dans le groupe constitué par l'air, l'hélium et l'argon.

4. Procédé d'éradication d'agents pathogènes et d'organismes nuisibles selon l'une quelconque des revendications 1 à 3, comprenant en outre :
la régulation d'une quantité du radical OH généré en régulant une quantité de l'eau fournie et/ou une quantité du gaz fourni.

5. Procédé d'éradication d'agents pathogènes et d'organismes nuisibles selon l'une quelconque des revendications 1 à 4,
dans lequel les agents pathogènes sont au moins un pathogène choisi dans le groupe constitué par la pyriculariose du riz, l'oïdium du blé, le purpura du soja, la maladie de la pourriture grise de la fraise, la maladie de la pourriture grise du concombre, la maladie de la pourriture grise de la tomate, la brûlure des feuilles du lys, l'oïdium du concombre, l'oïdium de la fraise, la cladosporiose de la tomate, la maladie de rouille de l'oignon, la maladie de rouille blanche du chrysanthème, la maladie des taches noires de l'oignon vert, la maladie des taches du pommier à feuilles caduques, la maladie des taches brunes du concombre, l'anthracnose du chrysanthème à couronne, la brûlure des feuilles du persil, la maladie des taches brunes du pommier et la maladie de bakanae.

6. Procédé d'éradication d'agents pathogènes et d'organismes nuisibles selon l'une quelconque des revendications 1 à 4,
dans lesquels les organismes nuisibles sont des acariens ou des pucerons.

7. Procédé d'éradication d'agents pathogènes et d'organismes nuisibles selon l'une quelconque des revendications 1 à 6,
dans lequel le radical OH est un radical OH qui est généré en réglant la tension à 10 à 20 kV et en introduisant de 0,001 à 10 ml de brouillard d'eau par heure.

8. Procédé d'éradication d'agents pathogènes et d'organismes nuisibles selon l'une quelconque des revendications 1 à 7,
dans lequel la quantité de gaz fournie est de 7 à 20 litres/minute.

9. Procédé d'éradication d'agents pathogènes et d'organismes nuisibles selon la revendication 7 ou 8,
dans lequel le radical OH est en outre appliqué aux agents pathogènes ou aux organismes nuisibles pendant au moins 5 à 15 minutes.

10. Procédé d'éradication non thérapeutique pour l'agriculture,
dans lequel le procédé d'éradication comprend le procédé d'éradication d'agents pathogènes et d'organismes nuisibles selon l'une quelconque des revendications 1 à 9.

11. Dispositif pour éradiquer des agents pathogènes et des organismes nuisibles, comprenant :
un récipient de réaction pour générer un plasma ; une paire d'électrodes ; une partie d'alimentation en eau ; une partie d'alimentation en gaz ; et une partie d'alimentation électrique,
dans lequel l'une des électrodes comprend une partie d'insertion qui est insérée dans le récipient de réaction,
l'autre électrode est disposée dans une position opposée à la partie d'insertion,
la partie d'alimentation en eau est disposée de sorte que la partie d'alimentation en eau peut fournir de l'eau par l'intermédiaire de la partie d'insertion dans le plasma généré, dans laquelle l'eau est un brouillard d'eau ou des gouttelettes d'eau,
la partie d'alimentation en gaz est disposée de sorte que la partie d'alimentation en gaz peut alimenter le récipient de réaction en gaz plasmagène et
la partie d'alimentation électrique est disposée de sorte que la partie d'alimentation électrique peut appliquer une tension entre la partie d'insertion et l'autre électrode de sorte à générer un radical OH dans le récipient de réaction dans lequel l'eau et le gaz sont alimentés.

12. Dispositif pour éradiquer des agents pathogènes et des organismes nuisibles selon la revendication 11,
dans lequel la partie d'insertion a une forme tubulaire, et la partie d'insertion peut alimenter le récipient de réaction en eau par l'intermédiaire d'un intérieur de celle-ci.

13. Dispositif pour éradiquer des agents pathogènes et des organismes nuisibles selon la revendication 12,
dans lequel la partie d'insertion comprend un élément linéaire qui est disposé de sorte à faire saillie à partir d'une extrémité de pointe pour transmettre l'eau passant par l'intérieur et qui est formé avec un fil mince.

14. Dispositif pour éradiquer des agents pathogènes et des organismes nuisibles selon la revendication 12, comprenant en outre :
un moyen de refroidissement qui est disposé de sorte qu'un espace est fourni entre l'extrémité de pointe et une surface extérieure de la partie d'insertion, que l'extrémité de pointe et la surface extérieure de la partie d'insertion sont recouvertes et que l'eau passant par la partie d'insertion passe par l'espace et est ensuite alimentée dans le récipient de réaction.

15. Dispositif pour éradiquer des agents pathogènes et des organismes nuisibles selon la revendication 11 ou 12,
dans lequel la partie d'alimentation en eau peut alimenter le récipient de réaction en brouillard d'eau.

16. Dispositif pour éradiquer des agents pathogènes et des organismes nuisibles selon l'une quelconque des revendications 11 à 15,
dans lequel l'autre électrode comprend une bobine disposée à l'intérieur ou à l'extérieur du récipient de réaction.

17. Dispositif pour éradiquer des agents pathogènes et des organismes nuisibles selon l'une quelconque des revendications 11 à 15,
dans lequel l'autre électrode comprend une partie d'électrode radiale formée par une pluralité de fils minces.

18. Dispositif pour éradiquer des agents pathogènes et des organismes nuisibles selon l'une quelconque des revendications 11 à 17,
dans lequel la partie d'alimentation électrique est une alimentation électrique à impulsions.

19. Dispositif pour éradiquer des agents pathogènes et des organismes nuisibles selon la revendication 18,
dans lequel la partie d'alimentation électrique comprend une alimentation électrique en courant alternatif.

20. Dispositif à plasma qui est formé avec le dispositif pour éradiquer des agents pathogènes et des organismes nuisibles selon l'une quelconque des revendications 11 à 19 et qui est utilisé dans le procédé d'éradication pour l'agriculture selon la revendication 10.
